# EUROPEAN PATENT SPECIFICATION

(11) **EP 1 318 646 B1**
(45) Date of publication and mention of the grant of the patent: **23.11.2005**
(21) Application number: 02025394.4
(22) Date of filing: 14.11.2002
(51) Int. Cl.: H04L 29/06

(54) **Method for speeding up the transfer of data objects through a network gateway, and router apparatus**
Verfahren zur Steigerung des Durchsatzes von Daten in einer Netzübergangseinrichtung, und Router
Procédé pour augmenter le débit des données dans un passerelle de réseau, et routeur

(30) Priority: 15.11.2001 US 2407
(43) Date of publication of application: 11.06.2003
(73) Proprietor: Aladdin Knowledge Systems, Ltd., Tel Aviv 61110 (IL)
(72) Inventor: Elazam, Ofer, Haim 26250 (IL); Gruper, Shimon, Haifa 26307 (IL)
(74) Representative: Plicka, Josef

(56) References cited:
- EP-A- 0 658 837
- EP-A- 0 910 197
- EP-A- 1 063 833
- EP-A- 1 122 932
- EP-A- 1 143 660
- WO-A-98/08163
- US-A- 5 623 600
- US-A- 5 884 025
- US-B1- 6 233 618
- US-B1- 6 304 973

## Description

The present invention relates to routing apparatus and methodologies generally.

### BACKGROUND OF THE INVENTION

The following U.S. Patents are believed to represent the state of the art: 5,835,726; 5,606,668; 6,249,801; 5,926,105.

### SUMMARY OF THE INVENTION

The present invention seeks to provide security routing apparatus and methodologies. Gateways for selectively screening data objects that enter computer networks according to type are known. Nevertheless, there is room for improvement in these gateways: in the criteria for selecting data object types to be screened, in the speed of the gateways, and in the number and type of options for handling the data objects that are available to the gateways.

There is provided by the present invention a system for routing an object. The system includes an object sensor, sensing information contained in an object, an information analyzer, analyzing the information to determine a security classification thereof and a route, routing the object to at least one address selected at least partially in accordance with the security classification.

Further in accordance with a preferred embodiment of the present invention the object includes a message.

Additionally or alternatively, the object includes at least of the following: a file, an e-mail message, a web page and a communication packet.

Still further in accordance with a preferred embodiment of the present invention the system for routing an object also includes a first interface providing interaction with the at least one first communication network and a second interface providing interaction with the at least one second communication network.

According to the present invention there is provided a method and router apparatus for speeding up the transfer of data objects through a network gateway that includes a virus detection system according to claims 1, 6, 9 and 10.

Coss et al., in EP 0 910 197 A2, teach a computer network firewall that is similar in some respects to the router apparatus of the present invention. The principle difference between the firewall of Coss et al. and the router apparatus of the present invention is that Coss et al. use stateful packet filtering. In stateful packet filtering, incoming packets are checked against all the rules of the firewall. Once a packet has been found to satisfy all the rules, subsequent similar packets, for example packets of the same network session, are passed without checking. Note that all incoming packets must be checked until a packet is found that satisfies all the rules. This is unlike the present invention, that uses a pre-determined criterion to check incoming data objects. Conceivably, even the first incoming data object could be routed around the virus detection system/means by the present invention if that incoming data object is classified as trusted.

Margalit et al., in EP 1 122 932 A2, teach a gateway, for protecting a computer from incoming packets with malicious content, that is similar to some respects to the router apparatus of the present invention. The component of the gateway that does the actual inspection of the packets is a packet collection agent. Like the present invention, the packet collection agent inspects an incoming packet to determine the type of file with which the packet is associated. If the file type is a trusted type, the packet is sent to its destination with no further inspection. Unlike the present invention, both type inspection and packet content inspection (if required) are performed by the same gateway component (the packet collection agent). The present invention, upon determining that the type of an incoming data object is trusted, routes that data object around the virus detection system/means, thereby providing a parallelism that is lacking in Margalit et al.

Bull et al., in WO 98/08163, teach a method of protecting an end user from "mobile program components", in an incoming data stream, that could damage the end user's system. The incoming mobile program components are diverted to an execution location in which the incoming mobile program components are executed in isolation from the end user's system. Optionally, mobile program components that are found to execute safely are passed on to the end user. In addition, incoming non-executable data and data generated by the execution of the mobile program components in the execution location are censored by the execution location before being passed on to the end user. By contrast, the present invention always passes, uncensored, data objects of a type that lacks executable code.

Ji et al., in US 5,623,600, teach a gateway that blocks viruses from entering a computer network by testing only files of types that are likely to contain viruses. Ji et al. do not specify explicitly what their criterion is for deciding what types of files are likely to contain viruses.

### BRIEF DESCRIPTION OF THE DRAWINGS

The present invention will be understood and appreciated more fully from the following detailed description, taken in conjunction with the drawings in which:
Fig. 1 is a simplified illustration, partially symbolically depicting an example of security routing functionality in a communication network in accordance with a preferred embodiment of the present invention;
Fig. 2 is a highly symbolic illustration depicting the example of Fig. 1;
Figs 3A - 3C are simplified illustrations, partially symbolically depicting an example of security routing functionality wherein objects are routed to various addresses, which are destination addresses, in accordance with various security classification thereof;
Figs. 4A - 4C are highly symbolic illustrations of the functionality of Figs. 3A - 3C respectively;
Figs. 5A - 5D are simplified illustrations, partially symbolically depicting an example of security routing functionality wherein objects are routed indirectly to various addresses, the routing being in accordance with various security classifications thereof;
Figs. 6A - 6D are highly symbolic illustrations of the functionality of Figs. 5A - 5D respectively;
Figs. 7A - 7D are simplified illustrations, partially symbolically depicting an example of security routing functionality wherein objects are routed along various routes in accordance with various security classifications thereof;
Figs. 8A - 8D are highly symbolic illustrations of the functionality of Figs. 7A - 7D respectively;
Figs. 9A - 9D are simplified illustrations, partially symbolically depicting an example of security routing functionality wherein objects are routed or not routed in accordance with various security classifications thereof; and
Figs. 10A - 10D are highly symbolic illustrations of the functionality of Figs. 9A - 9D respectively.

Although not related to the claimed subject matter, the following information is given:

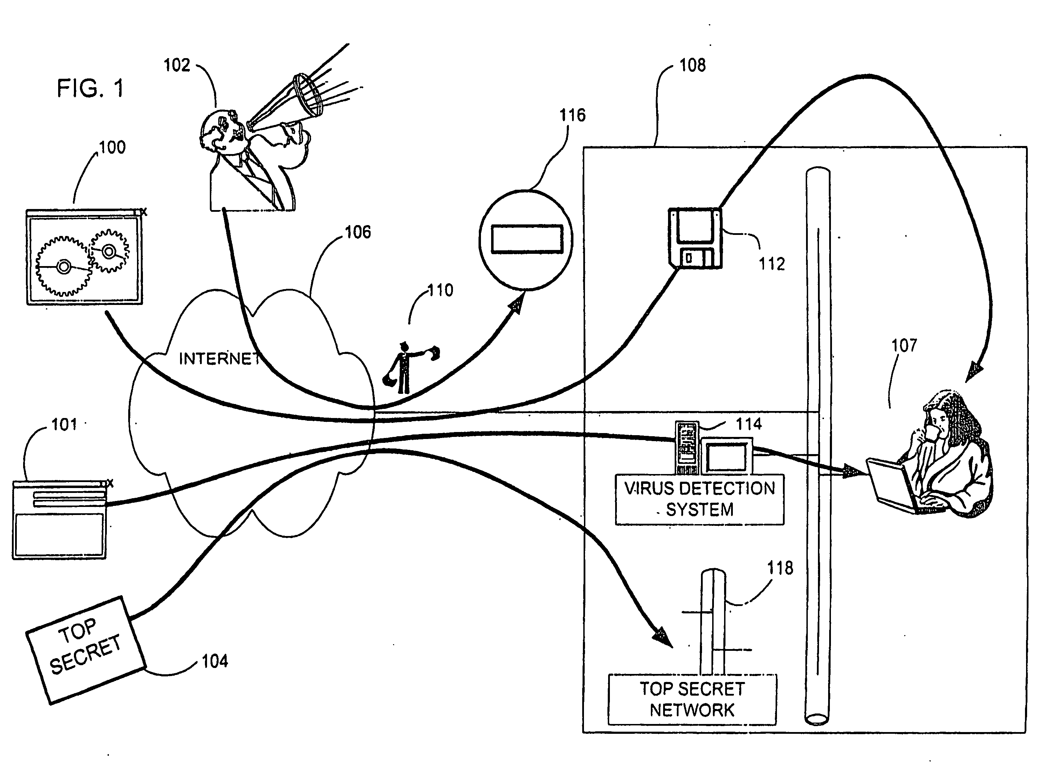

Fig. 1 shows the security routing functionality in an operative environment wherein the security classification of an object is a secrecy classification. Each object is routed according to its security classification.

As seen in Fig. 1, four messages with different security classifications, designated individually by reference numerals 100, 101, 102 and 104 are send via the Internet 106 to a user 107 within an organization 108 and are routed by a router symbolized by a signaling person and designated by reference numeral 110. Message 100 contains a device driver program, symbolized by a toothed wheel inside a computer window and is considered to be highly dangerous. Message 100 is shown routed by router 110 via a route 112 that employs a magnetic medium such a diskette as a transfer mechanism and is appropriate to the security classification of the object. Route 112 is marked with a diskette image. Message 101 contains a computer program, symbolized by a computer form and considered to be highly suspicious. Message 101 is routed by router 110 indirectly to a user 107 via an intermediate address having a security classification appropriate thereto, such as computer virus detection system 114. Message 102 contains offensive content, is symbolized by a shouting person and is considered to be somewhat malicious. Message 102 is not routed by router 110 to any destination address in the organization as symbolized by a no entry sign 116 blocking the message route. Message 104 include top-secret information is shown routed by router 110 to a top security network 118 within the organization whether or not a destination address is located within the security zone.

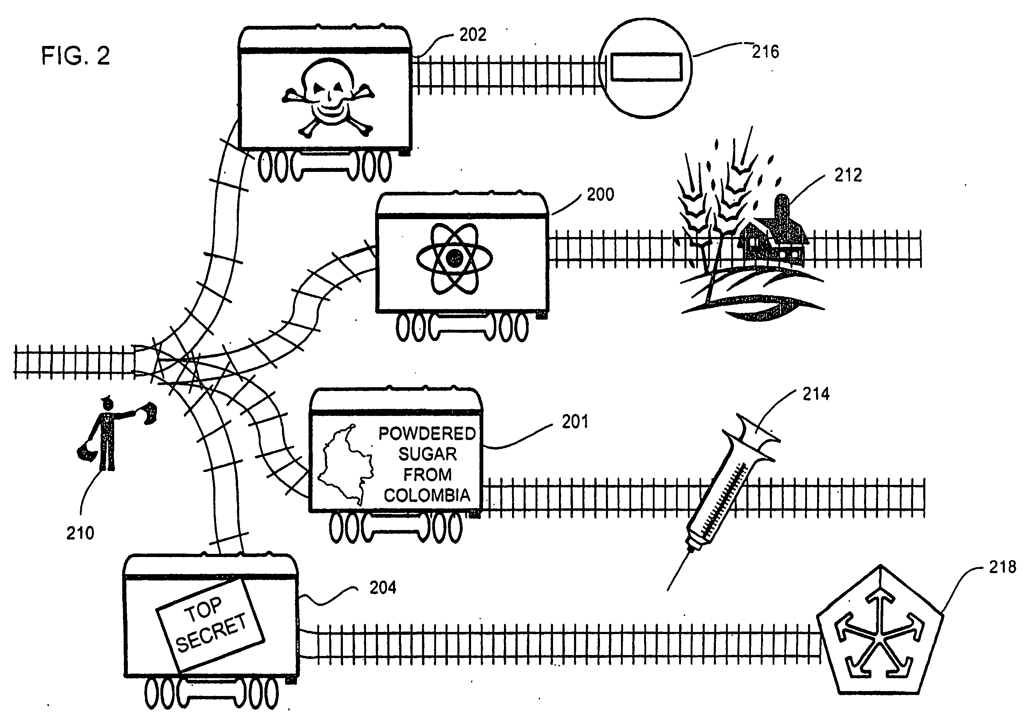

Fig. 2 illustrates the functionality of Fig. 1 in the symbolic context of railroad car routing. As seen in Fig. 2, four railroad cars with different security classifications, designated individually by reference numerals 200, 201, 202 and 204 are routed by a customs office symbolized by a signaling person designated by reference numeral 210. It is seen that a railroad car 200 carrying depleted uranium and marked with an atom figure, which is highly dangerous, is routed by customs agent 210 through the least populated route, symbolized by a country side landscape and designated by reference numeral 212, enroute to a destination address. Railroad car 201 carrying powered sugar from Colombia, which is highly suspicious, is routed by customs agent 210 via a DEA inspection center, symbolized by syringe and designated by reference numeral 214, enroute to a destination address. Railroad car 202 carrying illicit drugs and marked with a skull symbol, which is highly malicious, is not routed by custom agent 210 to any destination address as symbolized by a no entry sign 216 blocking the tracks. A railroad car 204 carrying government documents and marked with a top secret inscription, clearly having a high-level secrecy classification, is routed by customs agent 210 to the Pentagon 218 whether or not the Pentagon is a destination address of the railroad car.

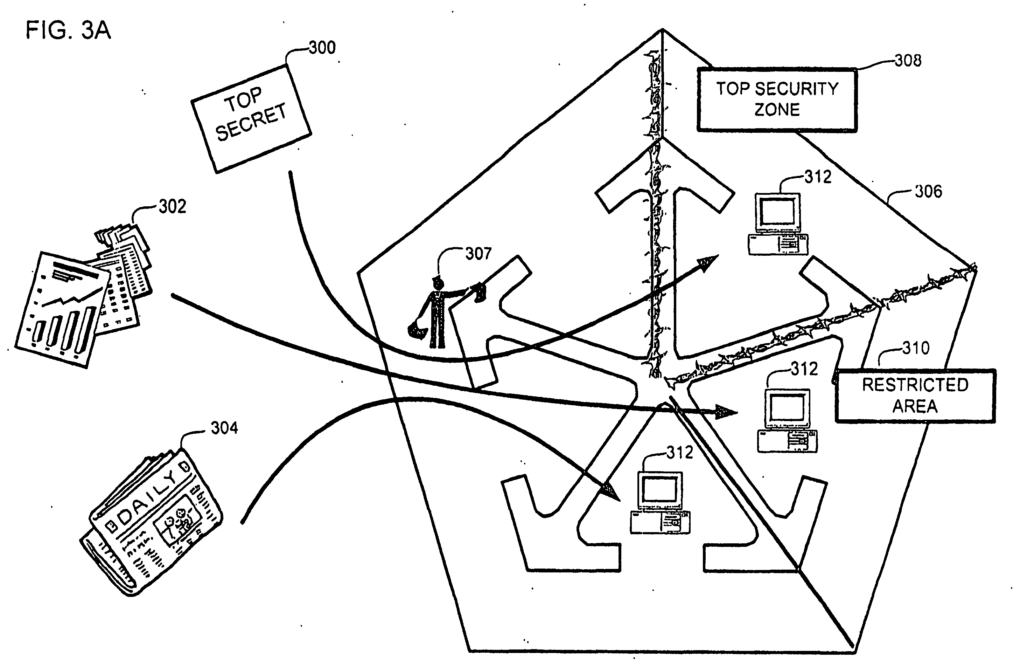

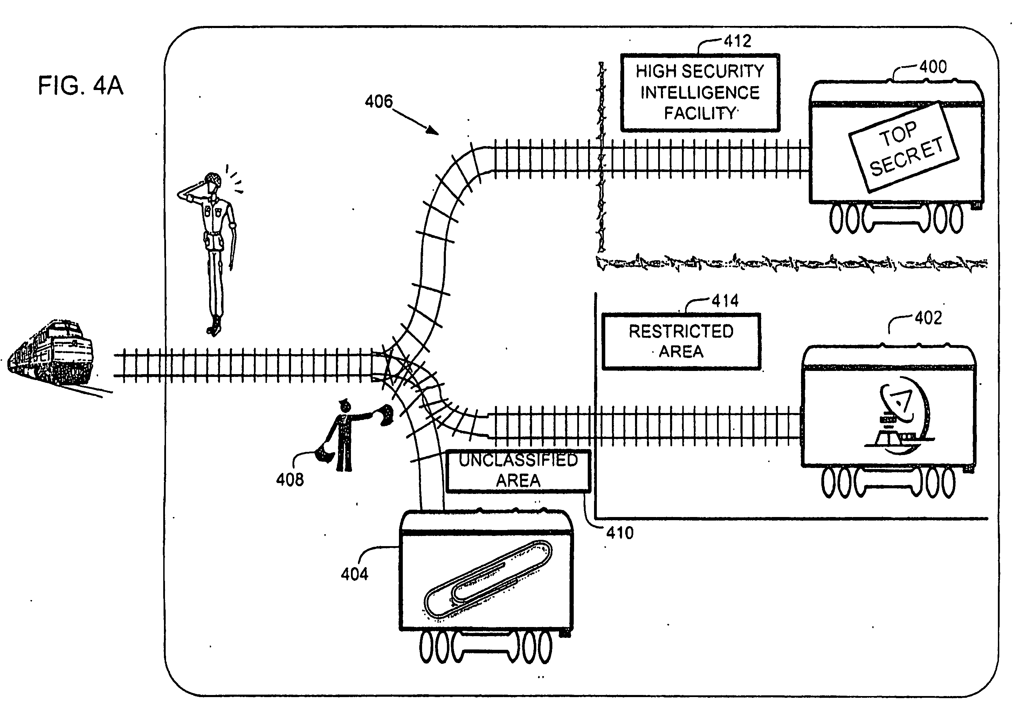

Reference is now made to Figs. 3A - 3C which are simplified illustrations, partially symbolically depicting an example of security routing functionality wherein objects are routed to various addresses, which may be or may not be destination addresses, in accordance with various security classifications thereof and to Figs. 4A - 4C, which are highly symbolic illustrations of the functionality of Figs. 3A - 3C respectively.

Fig. 3A shows the security routing functionality wherein the security classification of an object is a secrecy classification. Each object is routed to an address having a secrecy classification appropriate thereto, whether or not that address is a destination address of the object.

As seen in Fig. 3A, three messages with different secrecy classifications, designated individually by reference numerals 300, 302 and 304 are received at the Pentagon, which is designated by reference numeral 306 and routed by a router, symbolized by a signaling person and designated by reference numeral 307. A top-secret CIA Memo designated by reference numeral 300 is shown routed by router 307 to a top security zone 308 within the Pentagon whether or not a destination address is located within the security zone. A message containing next year's budget, symbolized by a report containing a graph and designated by reference numeral 302, which is secret but not top secret, is shown routed by router 307 to a restricted zone 310 whether or not a destination address is located within the restricted zone. A non-secret message received at the Pentagon, symbolized by a newspaper and designated by reference numeral 304, is routed by router 307 to any destination address within the Pentagon, such as computer 312.

Fig. 4A illustrates the functionality of Fig. 3A in the symbolic context of railroad car routing. As seen in Fig. 4A, three railroad cars with different secrecy classifications, designated individually by reference numerals 400, 402 and 404 arrive at a military base, which is designated by reference numeral 406 and are routed by a signaling person designated by reference numeral 408. It is seen that a railroad car 404 carrying office supplied and marked with a paperclip symbol, which clearly has a non-secret secrecy classification, is routed by signaling person 408 to a destination address 410 within the military base 406. A railroad car 400 arriving at the military base 406 carrying government documents and marked with a top secret inscription, clearly having a high-level secrecy classification, is routed by signaling person 408 to a highly secure intelligence facility 412 within the military base 406 whether or not the highly secure intelligence facility is a destination address of the railroad car. A railroad car 402 arriving at the military base 406 carrying electronic equipment and marked with a radar symbol, presumably having a medium level secrecy classification, is routed by signaling person 408 to a restricted zone 414 within the military base 406 whether or not a destination address of the railroad car is within the restricted zone 414.

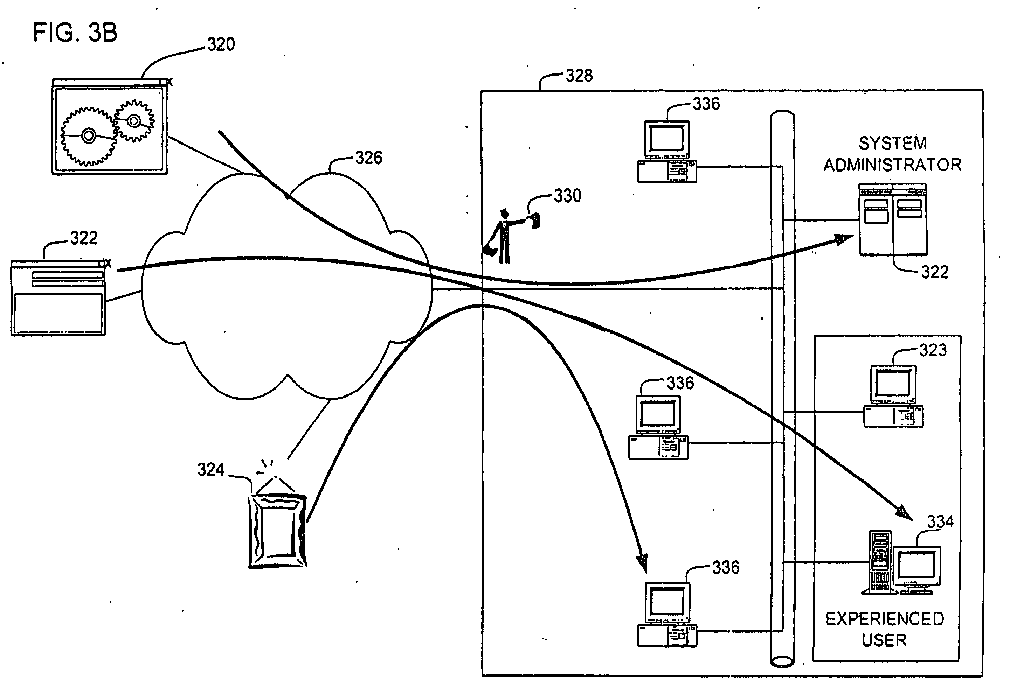

Fig. 3B shows the security routing functionality wherein the security classification of an object is a danger classification. Each object is routed to an address having a capability to handle objects of the given danger classification, whether or not the address is a destination address of the object.

As seen in Fig. 3B, three messages with different danger classifications, designated individually by reference numerals 320, 322 and 324 are received via the Internet 326 at an organization 328 and are routed by a router symbolized by a signaling person and designated by reference numeral 330. Message 320, which contains a device driver program, symbolized by a toothed wheel inside a computer window and considered to be highly dangerous, is shown routed by router 330 to a computer system administrator symbolized by a highly sophisticated computer and designated by reference numeral 332, whether or not the computer system administrator 322 is a destination address of the message 320. Message 322, which contains a computer program, symbolized by a computer form and considered to be somewhat dangerous, is routed by router 330 to an experienced user working in the same department as a user 323 that is a destination address of the message 322. The experienced user is symbolized by a computer of medium sophistication and is designated by reference numeral 334. A non-dangerous message 324, which contains a drawing, symbolized by a picture frame, is routed by router 330 to any destination address, such as computer 336.

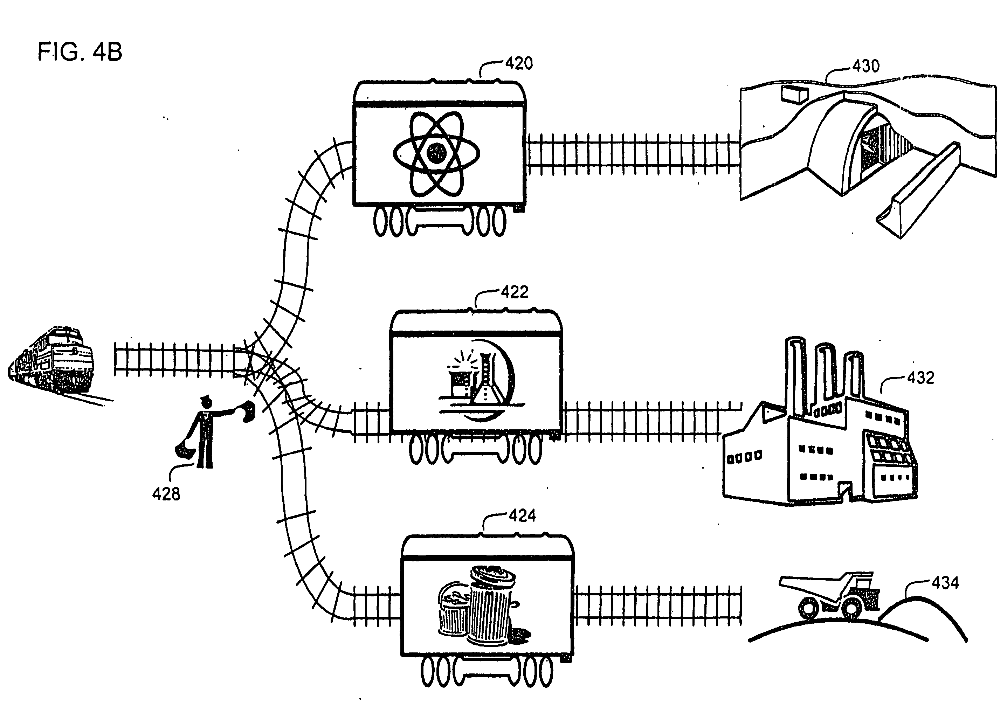

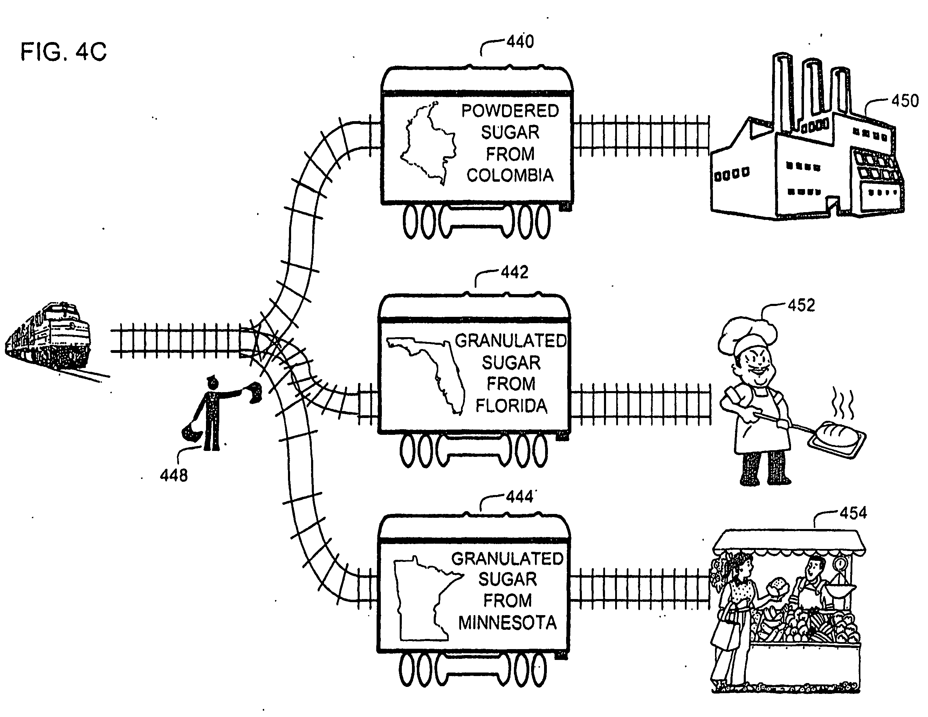

Fig. 4B illustrates the functionality of Fig. 3B in the symbolic context of railroad car routing. As seen in Fig. 4B, three railroad cars with different danger classifications, designated individually by reference numerals 420, 422 and 424 are routed by a signaling person designated by reference numeral 428. Railroad car 420 carrying depleted uranium and marked with an atom figure, which is highly dangerous, is routed by the signaling person 428 to a remote underground disposal site, designated by reference numeral 430. A railroad car 422 carrying hospital waste and marked with a figure of test tubes, which is somewhat dangerous, is routed by the signaling person 428 to an incinerator, designated by reference numeral 432. A railroad car 424, carrying waste plastic and glass and marked with a trash bin figure, is routed to by the signaling person 428 to a landfill designated by reference numeral 434.

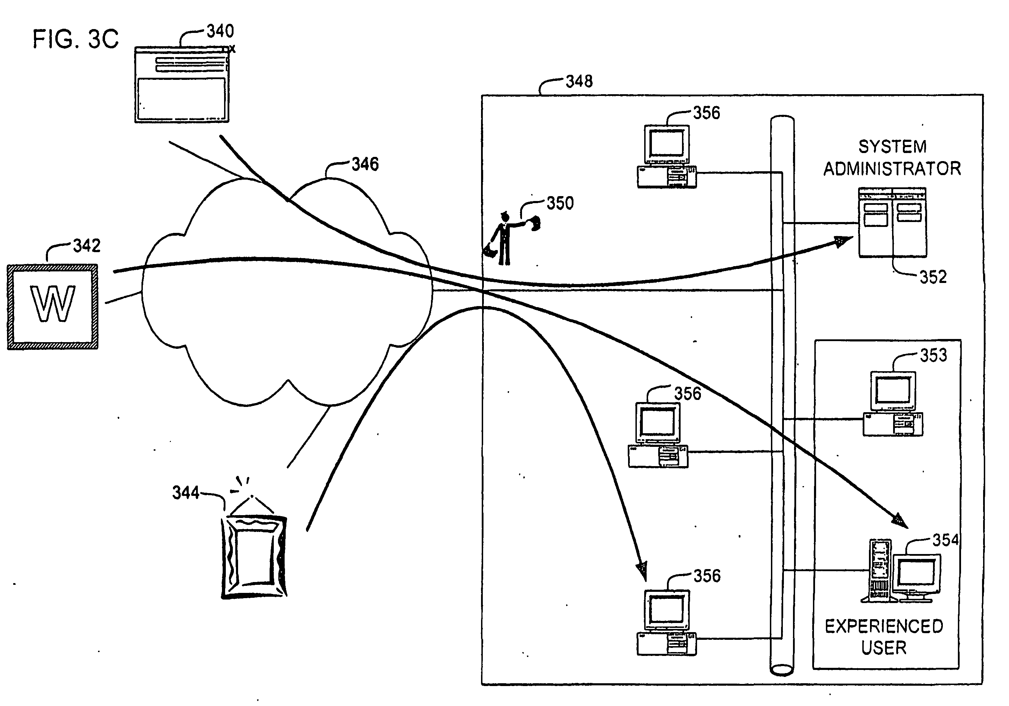

Fig. 3C shows the security routing functionality wherein the security classification of an object is a suspiciousness classification. Each object is routed to an address having sufficient strength to handle objects of the given suspiciousness classification, whether or not the address is a destination address of the object.

As seen in Fig. 3C, three messages with different suspiciousness classifications, designated individually by reference numerals 340, 342 and 344 are received via the Internet 346 at an organization 348 and are routed by a router symbolized by a signaling person and designated by reference numeral 350. Message 340 contains a computer program is symbolized by a computer form and is considered to be highly suspiciousness. Message 340 is shown routed by router 350 to a computer system administrator symbolized by a highly sophisticated computer and designated by reference numeral 352, whether or not the computer system administrator is a destination address of the message. Message 342, which contains a Microsoft Word document and is symbolized by a Microsoft Word icon, is considered to be somewhat dangerous. Message 342 is routed by router 350 to an experienced user, working in the same department, as a user 353 that is a destination address of the message. The experienced user is symbolized by a computer of medium sophistication and is designated by reference numeral 354. A non-dangerous message 344, which contains a drawing, symbolized by a picture frame and considered to be somewhat dangerous, is routed by router 350 to any destination address, such as computer 356.

Fig. 4C illustrates the functionality of Fig. 3C in the symbolic context of railroad car routing. It is seen that a railroad car carrying powered sugar from Colombia, which is highly suspicious, is sent to a nation-wide soft-drinks manufacturer, which has strict quality control facilities, while granulated sugar from Florida, which is somewhat suspicious, is sent to a local bakery, which has some quality control procedures in place. A railroad car carrying granulated sugar from Minnesota is sent to an open market.

Fig. 4C illustrates the functionality of Fig. 3C in the symbolic context of railroad car routing. As seen in Fig. 4C, three railroad cars with different suspiciousness classifications, designated individually by reference numerals 440, 442 and 444 are routed by a signaling person designated by reference numeral 448. Railroad car 440 carrying powered sugar from Colombia, which is highly suspicious, is routed by signaling person 448 to a nation-wide soft-drinks manufacturer designated by reference numeral 450, which has strict quality control facilities. A railroad car 442 carrying granulated sugar from Florida, which is somewhat suspicious, is routed by signaling person 448 to a local bakery, symbolized by a baker and designated by reference numeral 452, which has some quality control procedures in place. A railroad car 444, carrying granulated sugar from Minnesota, is routed to by signaling person 448 to any destination address such as open market 454.

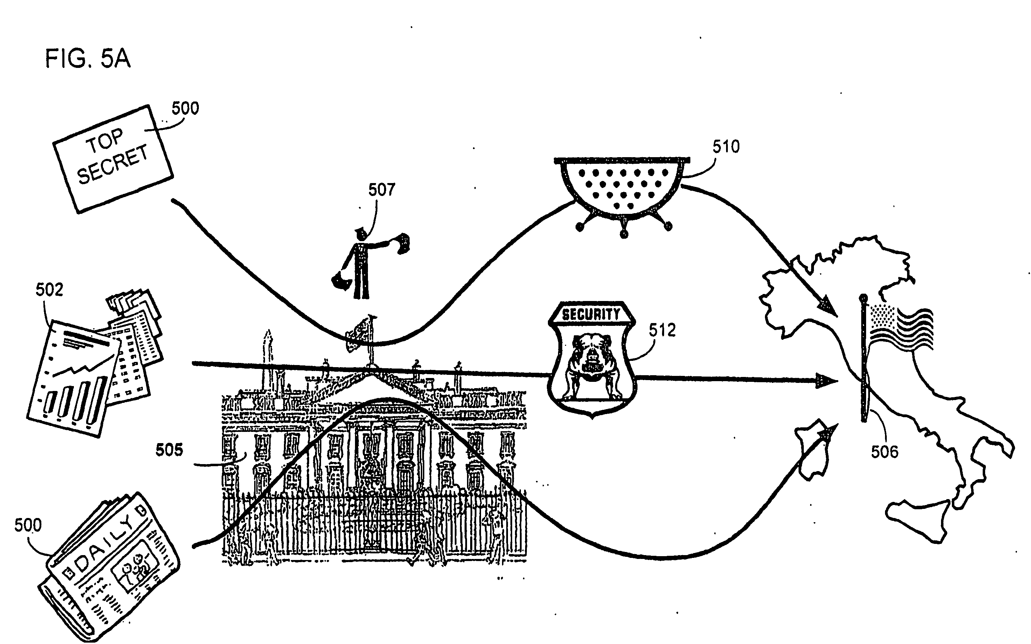

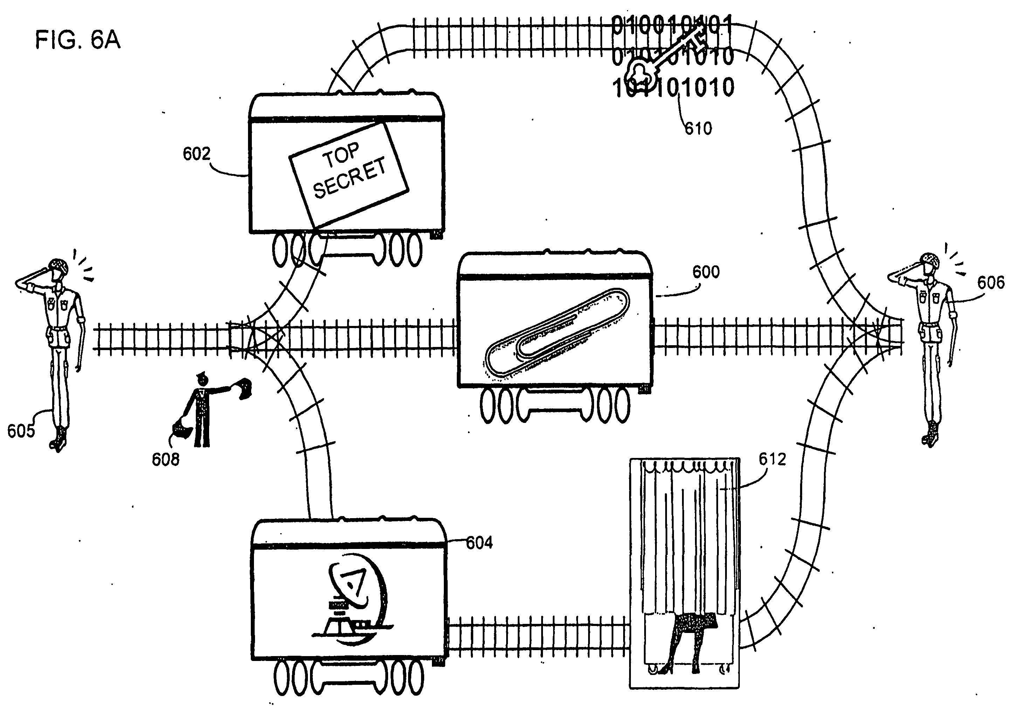

Reference is now made to Figs. 5A - 5D which are simplified illustrations, partially symbolically depicting an example of security routing functionality wherein objects are routed indirectly to a destination addresses via specific nodes in accordance with various security classifications thereof and to Figs. 6A - 6D, which are highly symbolic illustrations of the functionality of Figs. 5A - 5D respectively.

Fig. 5A shows the security routing functionality wherein the security classification of an object is a secrecy classification. Each object is routed indirectly to an address via a route having a secrecy classification appropriate thereto.

As seen in Fig. 5A, three messages with different secrecy classifications, designated individually by reference numerals 500, 502 and 504 are sent from the White House, which is designated by reference numeral 505, to an embassy in a foreign country, symbolized by an American flag on a map of Italy and designated by reference numeral 506, and routed by a router, symbolized by a signaling person and designated by reference numeral 507. A top-secret message 500 sent from the White House is routed by router 507 via a CIA declassification expert, symbolized by strainer and designated by reference numeral 510. A message containing next year's budget, symbolized by a report containing a graph and designated by reference numeral 502, which is secret but not top secret, is shown routed by router 507 via a White House Security Office, symbolized by a security badge and designated by reference numeral 512. A non-secret message, such as press release is sent directly to the to embassy 506.

Fig. 6A illustrates the functionality of Fig. 5A in the symbolic context of railroad car routing. As seen in Fig. 6A, three railroad cars with different secrecy classifications, designated individually by reference numerals 600, 602 and 604 sent to sent from a first military base symbolized by a saluting soldier and designated by reference number 605 to a second military base also symbolized by a saluting soldier and designated by reference number 606. The railroad cars are routed by a signaling person designated by reference numeral 608. It is seen that a railroad car 600 carrying office supplied and marked with a paper clip symbol, which clearly has a non-secret secrecy classification, is routed by signaling person 608 directly to base 606. A railroad car 602 carrying documents and marked with a top secret inscription, clearly having a high level secrecy classification, routed by signaling person 608 via an encryption facility symbolized by binary digits overlaid with a key and designated by reference numeral 610. A railroad car 604 carrying radar equipment and marked with a radar symbol, presumably having a medium level secrecy classification, is routed by signaling person 608 via a disguise facility symbolized by person behind a curtain and designated by reference numeral 612.

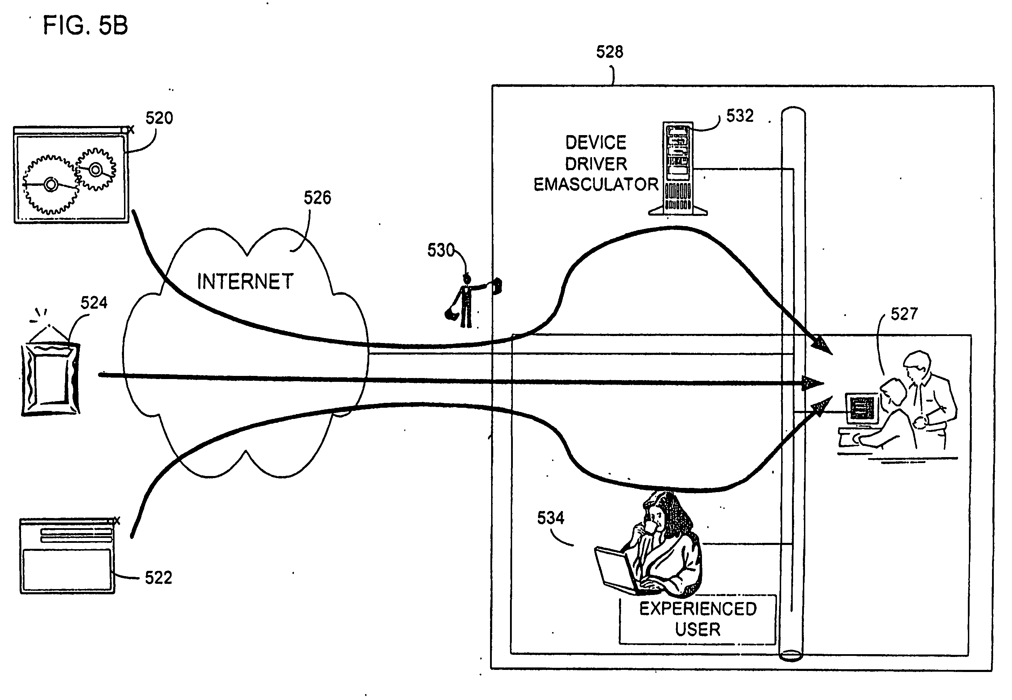

Fig. 5B shows the security routing functionality wherein the security classification of an object is a danger classification. Each object is routed along a route having a capability to deal with objects of the given danger classification, such as a suitable danger reduction facility.

As seen in Fig. 5B, three messages with different danger classifications, designated individually by reference numerals 520, 522 and 524 are sent via the Internet 526 to a user 527 within an organization 528 and are routed by a router symbolized by a signaling person and designated by reference numeral 530. Message 520, which contains a device driver program, symbolized by a toothed wheel inside a computer window and considered to be highly dangerous, is shown routed by router 530 via a device driver emasculator, which removes file system operations therefrom and is designated by reference numeral 532. Message 522, which contains a computer program, symbolized by a computer form and considered to be somewhat dangerous, is routed by router 530 via an experienced user working in the same department as user 527. The experiences user is distinguished by a notebook computer and is designated by reference numeral 534. A non-dangerous message 524, which contains a drawing, symbolized by a picture frame, is routed by router 530 directly to user 527.

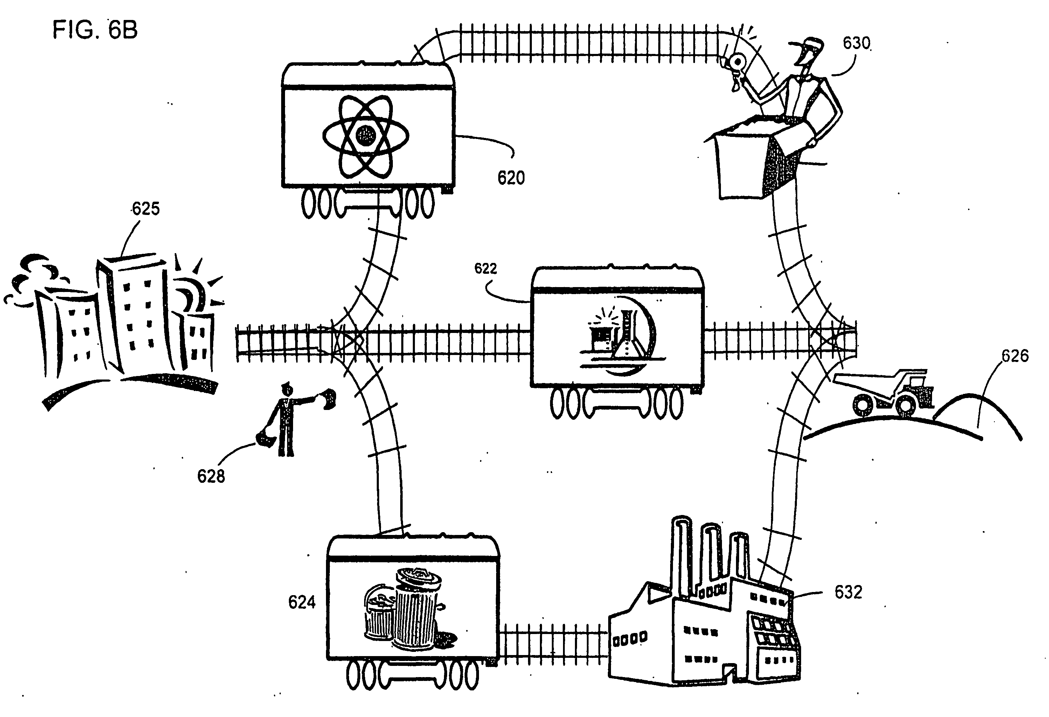

Fig. 6B illustrates the functionality of Fig. 5B in the symbolic context of railroad car routing. As seen in Fig. 6B, three railroad cars with different danger classifications, designated individually by reference numerals 620, 622 and 624 are sent from a city designated by reference numeral 625 to a disposal site designated by reference numeral 626 and are routed by a signaling person designated by reference numeral 628. Railroad car 620 carrying depleted uranium and marked with an atom figure, which is highly dangerous, is routed by signaling person 628 via a lead encapsulation facility, symbolized by a person wrapping a package and designated by reference numeral 630. A railroad car 622 carrying hospital waste and marked with a figure of test tubes, which is somewhat dangerous, is routed by signaling person 628 via an incinerator, designated by reference numeral 632, to disposal site 626. A railroad car 624, carrying waste plastic and glass and marked with a trash bin figure, is routed to by signaling person 628 directly to disposal site 626.

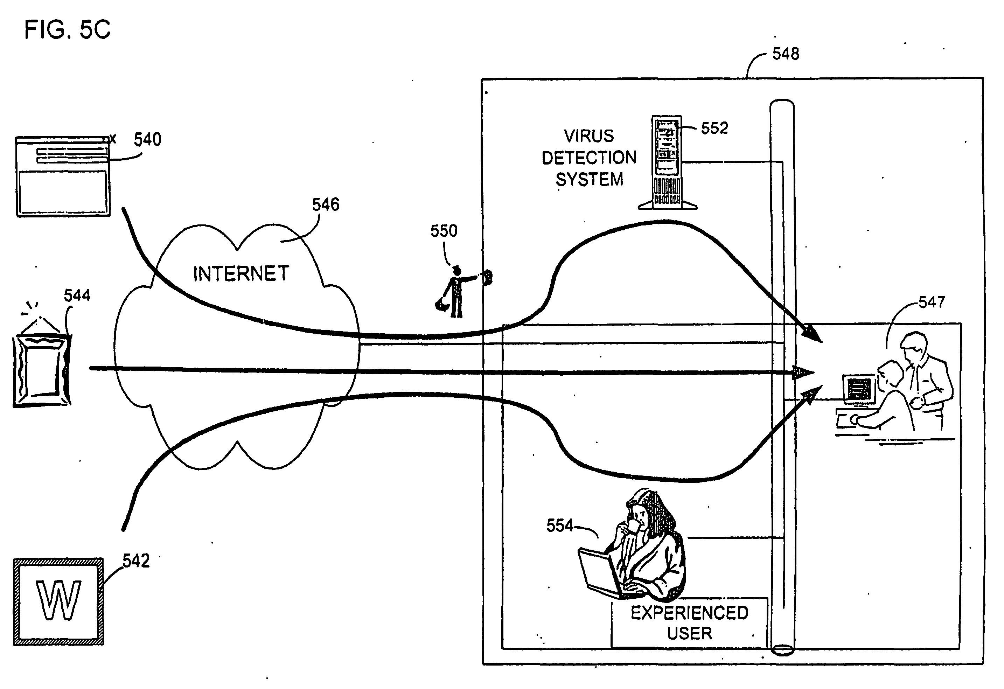

Fig. 5C shows the security routing functionality of the present invention in an operative environment wherein the security classification of an object is a suspiciousness classification. In accordance with a preferred embodiment of the invention, each object is routed along a route having a capability to deal with objects of the given suspiciousness classification, such as an appropriate inspection facility.

As seen in Fig. 5C, three messages with different suspiciousness classifications, designated individually by reference numerals 540, 542 and 544 are sent via the Internet 546 to a user 547 within an organization 548 and are routed by a router symbolized by a signaling person and designated by reference numeral 550. Message 540 contains a computer program, is symbolized by a computer form and is considered to be highly suspicious. Message 540 is routed by router 550 via a computer virus detection system 552. Message 542, which contains a Microsoft Word document is symbolized by a Microsoft Word icon and is considered to be somewhat suspicious. Message 542 is routed by router 550 via an experienced user 554 working in the same department as user 547. The experienced user is distinguished by a notebook computer and is designated by reference numeral 554. A non-suspicious message 544, which contains a drawing, symbolized by a picture frame, is routed by router 550 directly to user 547.

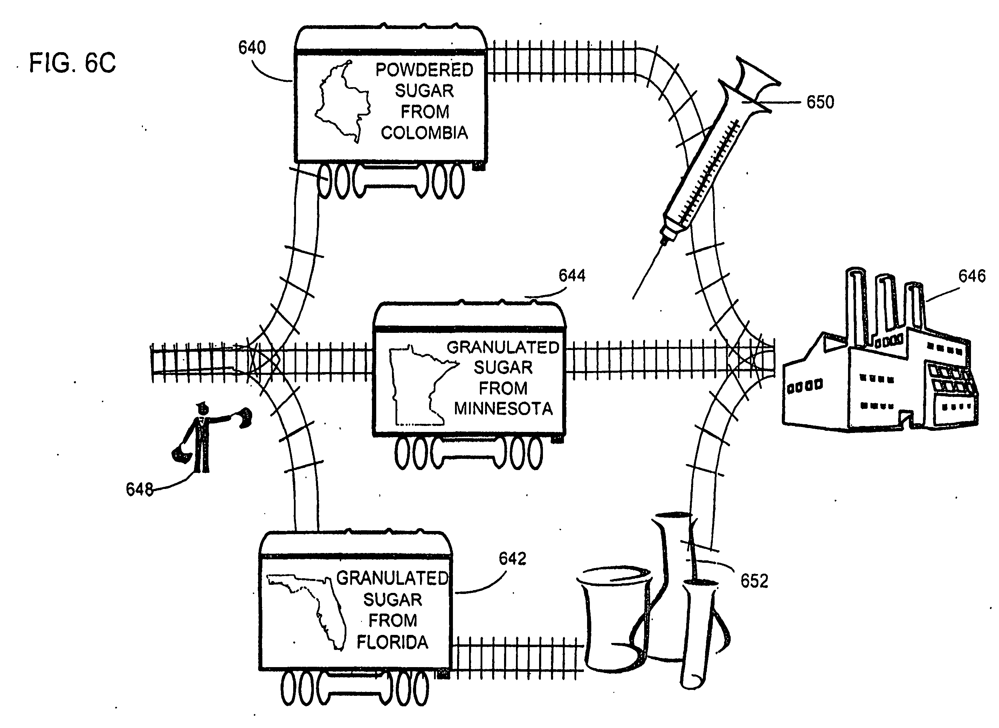

Fig. 6C illustrates the functionality of Fig. 5C in the symbolic context of railroad car routing. As seen in Fig. 6C, three railroad cars with different suspiciousness classifications, designated individually by reference numerals 640, 642 and 644 are sent to a soft-drinks manufacturer designated by reference numeral 646 and are routed by an FDA agent symbolized by a signaling person and designated by reference numeral 648. Railroad car 640 carrying powered sugar from Colombia, which is highly suspicious, is routed by FDA agent 648 via a DEA inspection center, symbolized by syringe and designated by reference numeral 650. A railroad car 642 carrying granulated sugar from Florida, which is somewhat suspicious, is routed by signaling person 648 via a FDA food inspection facility symbolized by test tubes and designated by reference numeral 652. A railroad car 644, carrying granulated sugar from Minnesota, is routed by signaling person 648 directly to manufacturer 646.

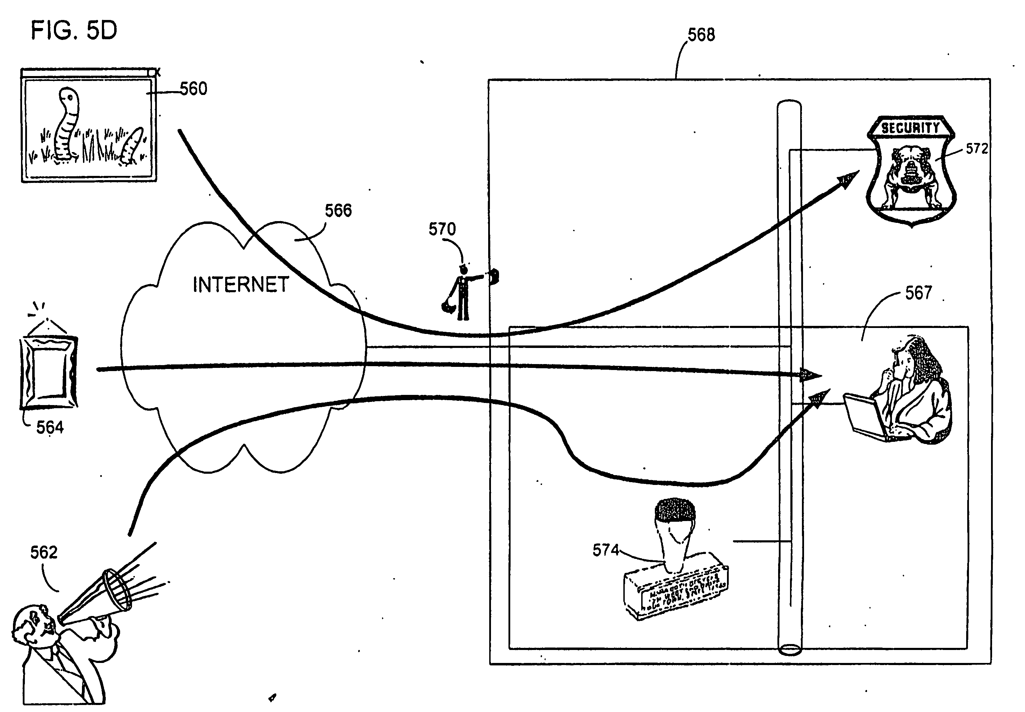

Fig. 5D shows the security routing functionality in an operative environment wherein the security classification of an object is a maliciousness classification. Each object is routed along a route having a capability to deal with objects of the given maliciousness classification, such as a suitable danger reduction facility

As seen in Fig. 5D, three messages with different maliciousness classifications, designated individually by reference numerals 560, 562 and 564 are sent via the Internet 566 to a user 567 within an organization 568 and are routed by a router symbolized by a signaling person and designated by reference numeral 570. Message 560 contains a VBS worm-virus, is symbolized by a worm symbol within a computer window and is considered to be highly malicious. Message 560 is routed by router 570 to a computer security officer, symbolized by a security badge and designated by reference numeral 572. Message 562 contains offensive content, is symbolized by a shouting person and is considered to be somewhat malicious. Message 562 is routed by router 570 via an offensive content warning facility, symbolized by a rubber stamp and designated by reference number 574, which attaches a suitable warning to the document, enroute to user 567. A non-malicious message 564, which contains a drawing, symbolized by a picture frame, is routed by router 570 directly to user 567.

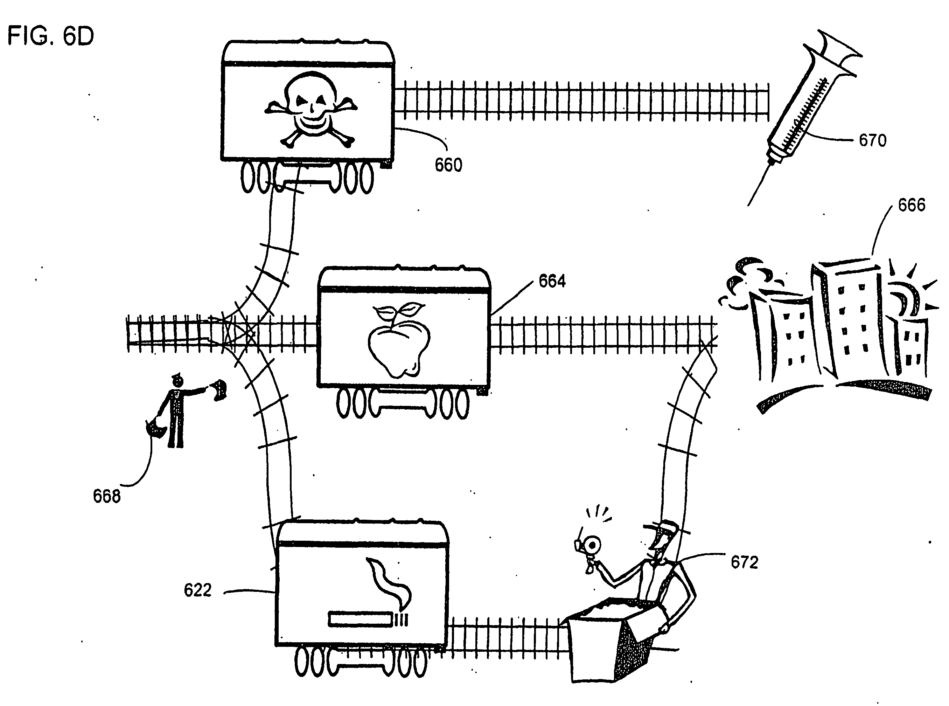

Fig. 6D illustrates the functionality of Fig. 5D in the symbolic context of railroad car routing. As seen in Fig. 6D, three railroad cars with different maliciousness classifications, designated individually by reference numerals 660, 662 and 664 are sent to a city designated by reference numeral 666 and are routed by an FDA agent symbolized by a signaling person and designated by reference numeral 668. Railroad car 660 carrying illicit drugs and marked with a skull symbol, which is highly malicious, is routed by FDA agent 668 to a DEA enforcement center symbolized by a syringe and designated by reference numeral 670. A railroad car 662 carrying cigarettes and marked with a cigarette symbol, which is somewhat malicious, is routed by signaling person 668 via packaging facility, symbolized by a person wrapping a package and designated by reference numeral 672, for adding Surgeon General warnings to each package enroute to city 666. A railroad car 664, carrying fruits and marked with an apple symbol is routed by signaling person 668 directly to city 666.

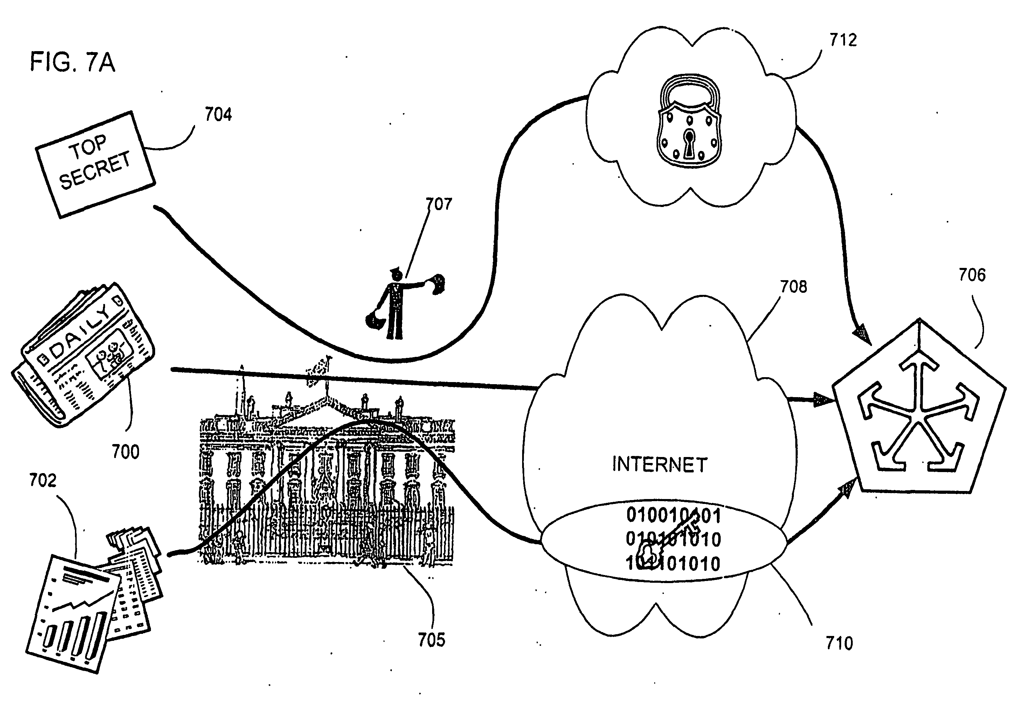

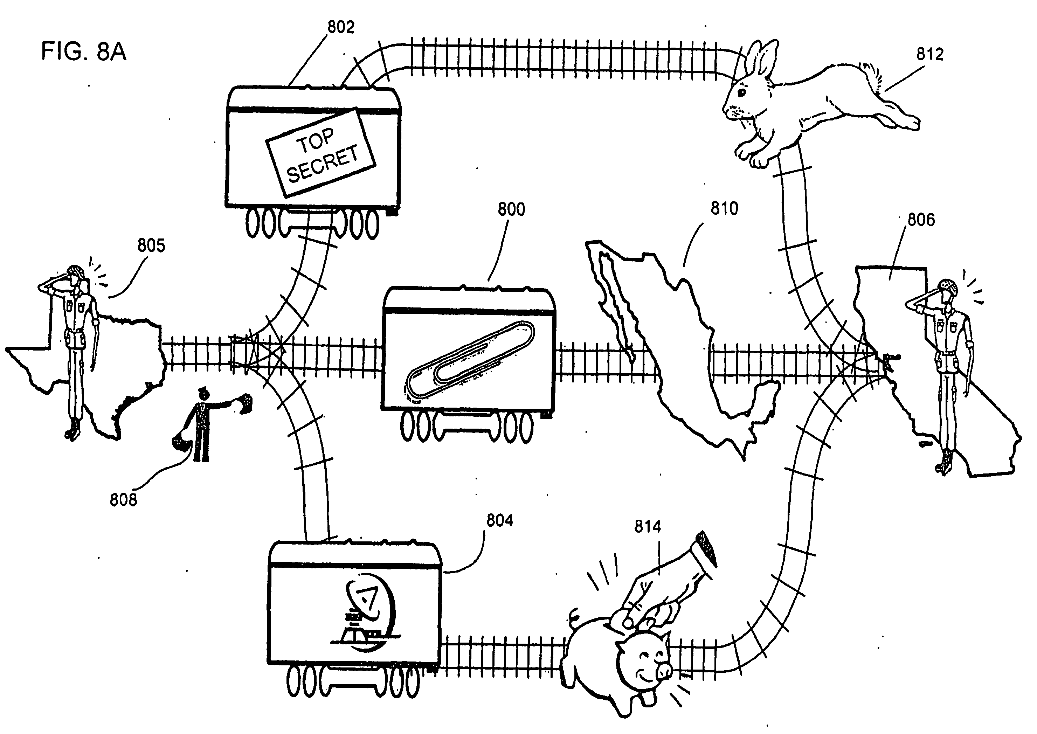

Reference is now made to Figs. 7A - 7D which are simplified illustrations, partially symbolically depicting an example of security routing functionality wherein objects are routed along various routes, in accordance with various security classifications thereof and to Figs. 8A - 8D, which are highly symbolic illustrations of the functionality of Figs. 7A - 7D respectively.

Fig. 7A shows the security routing functionality wherein the security classification of an object is a secrecy classification. Each object is routed via a route appropriate to the secrecy classification of the object

As seen in Fig. 7A, three messages with different secrecy classifications, designated individually by reference numerals 700, 702 and 704 are sent from the White House, which is designated by reference numeral 705, to the Pentagon, which is designated by reference numeral 706, and routed by a router, symbolized by a signaling person and designated by reference numeral 707. A non-secret message, such as press release 700 is shown routed by router 707 via the Internet, symbolized by a network cloud and designated by reference numeral 708. A message containing next year's budget, symbolized by a report containing a graph and designated by reference numeral 702, which is secret but not top secret, is shown routed by router 707 through a virtual private network (VPN) over the Internet. The VPN over the Internet is symbolized by an ellipse marked with binary digits overlaid with a key and designated by reference numeral 710. A top-secret message 704 is routed by router 707 via a secure intra-government computer network, symbolized by a network cloud overlaid with a lock and designated by reference numeral 712.

Fig. 8A illustrates the functionality of Fig. 7A in the symbolic context of railroad car routing. As seen in Fig. 8A, three railroad cars with different secrecy classifications, designated individually by reference numerals 800, 802 and 804 sent to sent from a military base in Texas, symbolized by a saluting soldier over the map of Texas and designated by reference number 805 to a military base in California, symbolized by a saluting soldier over the map of California and designated by reference number 806. The railroad cars are routed by a signaling person designated by reference numeral 808. It is seen that a railroad car 800 carrying office supplied and marked with a paper clip symbol, which clearly has a non-secret secrecy classification, is routed by signaling person 808 through a route which includes Mexico, symbolized by a map of Mexico and designated by reference numeral 810. A railroad car 802 carrying documents and marked with a top secret inscription, clearly having a high level secrecy classification, is routed by signaling person 808 via the fastest wholly domestic route, symbolized by a rabbit and designated by reference numeral 812. A railroad car 804 carrying radar equipment and marked with a radar symbol, presumably having a medium level secrecy classification, is routed by signaling person 808 via the most economical domestic route symbolized by piggy bank and designated by reference numeral 814.

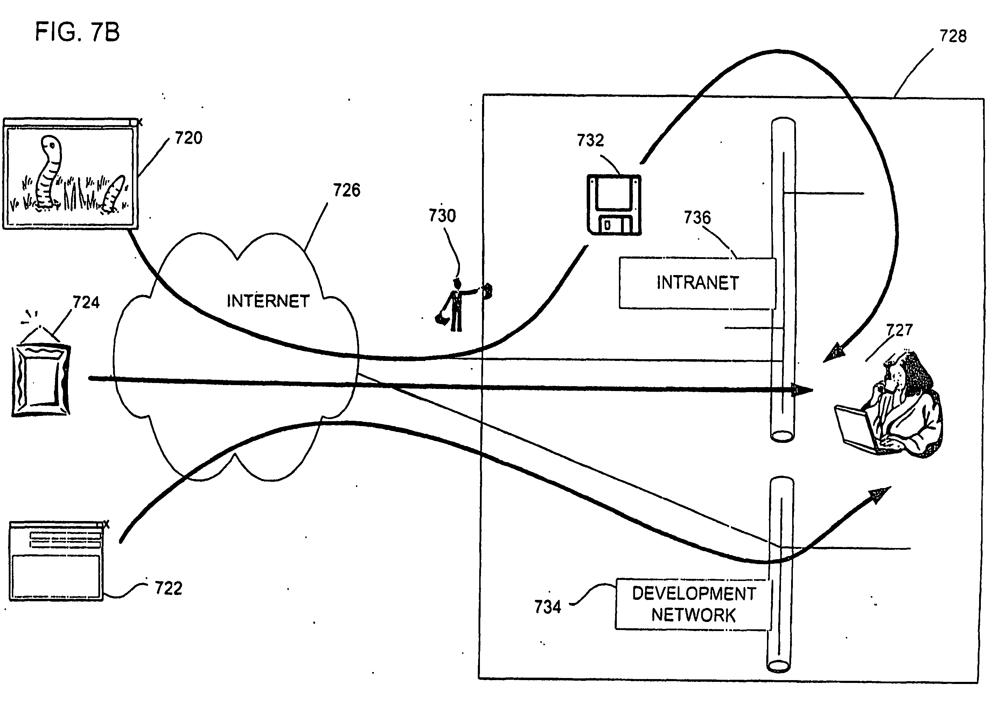

Fig. 7B shows the security routing functionality wherein the security classification of an object is a danger classification. Each object is routed via a route appropriate to the danger classification of the object.

As seen in Fig. 7B, three messages with different danger classifications, designated individually by reference numerals 720, 722 and 724 are send via the Internet 726 to a user 727 within an organization 728 and are routed by a router symbolized by a signaling person and designated by reference numeral 730. Message 720, which contains a VBS worm-virus needed for research purposes, is symbolized by a worm symbol within a computer window and is considered to be highly dangerous. Message 720 is shown routed by router 730 via a route 732 that employs a magnetic medium such a diskette as a transfer mechanism. Route 732 is marked with a diskette image. Message 722, which contains a beta version of a computer program, symbolized by a computer form and considered to be somewhat dangerous, is routed by router 730 through an isolated development network 734. A non-dangerous message 724, which contains a drawing, symbolized by a picture frame, is routed by router 730 through the organization's Intranet 736.

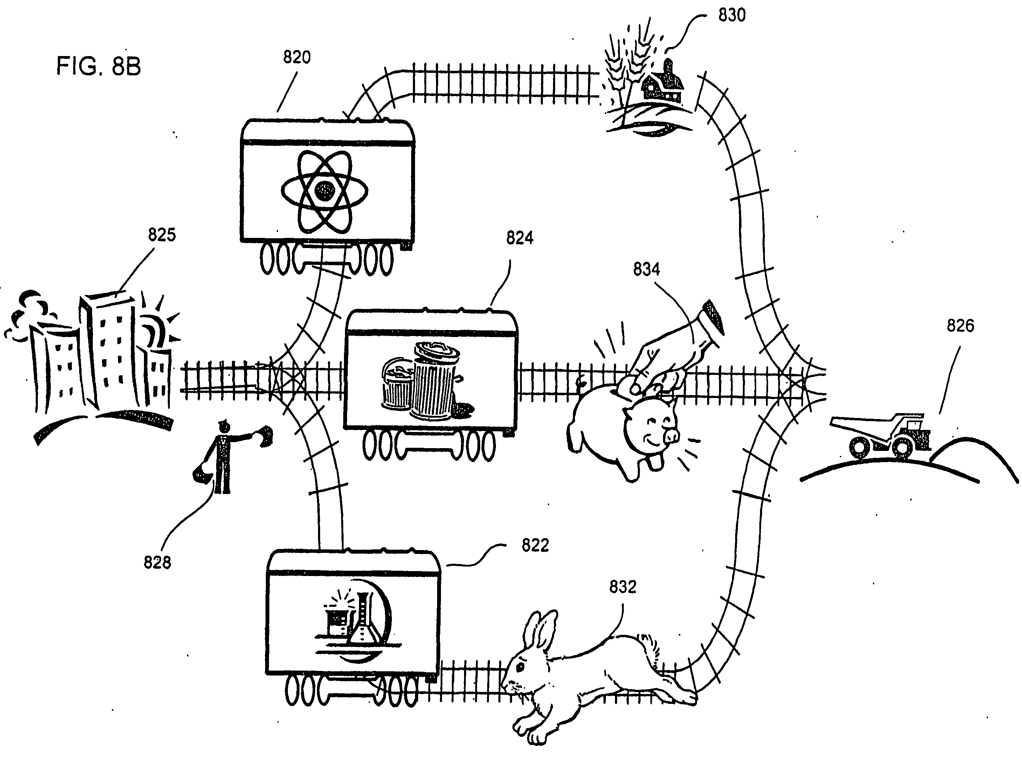

Fig. 8B illustrates the functionality of Fig. 7B in the symbolic context of railroad car routing. As seen in Fig. 8B, three railroad cars with different danger classifications, designated individually by reference numerals 820, 822 and 824 are sent from a city designated by reference numeral 825 to a disposal site designated by reference numeral 826 and are routed by a signaling person designated by reference numeral 828. Railroad car 820 carrying depleted uranium and marked with an atom figure, which is highly dangerous, is routed by signaling person 828 through the least populated route, symbolized by a country side landscape and designated by reference numeral 830. A railroad car 822 carrying hospital waste and marked with a figure of test tubes, which is somewhat dangerous, is routed by signaling person 828 along the faster route, symbolized by a rabbit and designated by reference numeral 832. A railroad car 824, carrying waste plastic and glass and marked with a trash bin figure, is routed to by signaling person 828 via the most economical domestic route symbolized by piggy bank and designated by reference numeral 834.

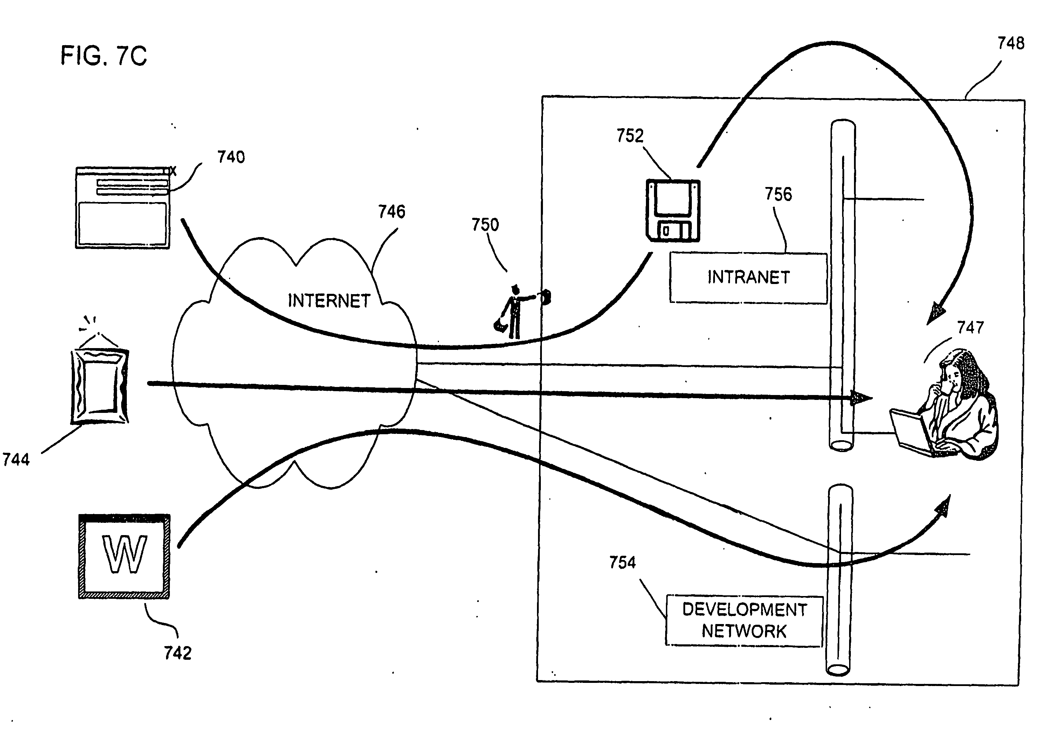

Fig. 7C shows the security routing functionality wherein the security classification of an object is a suspiciousness classification. Each object is routed via a route having a capability to deal with objects of the given suspiciousness classification, such as an appropriate inspection facility.

As seen in Fig. 7C, three messages with different suspiciousness classifications, designated individually by reference numerals 740, 742 and 744 are send via the Internet 746 to a user 747 within an organization 748 and are routed by a router symbolized by a signaling person and designated by reference numeral 750. Message 740 contains a VBS Script, is symbolized by a computer form and is considered to be highly suspicious. Message 740 is routed along route 752 that employs a magnetic medium such a diskette as a transfer mechanism. Route 752 is marked with a diskette image. Message 742, which contains a Microsoft Word document is symbolized by a Microsoft Word icon and is considered to be somewhat suspicious. Message 742 is routed by router 750 via an isolated development network 754. A non-suspicious message 744, which contains a drawing, symbolized by a picture frame: is routed by router 750 through the organization's general purpose network 756.

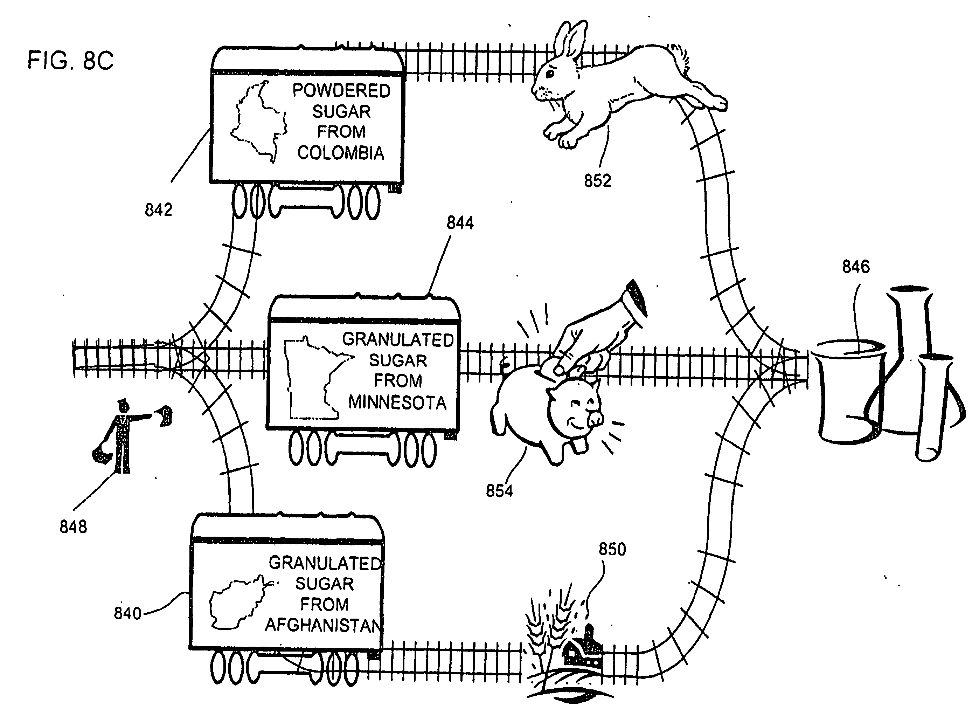

Fig. 8C illustrates the functionality of Fig. 7C in the symbolic context of railroad car routing. As seen in Fig. 8C, three railroad cars with different suspiciousness classifications, designated individually by reference numerals 840, 842 and 844 are sent to an FDA inspection center symbolized by a figure of test tubes and designated by reference numeral 846. The railroad cars are routed by an FDA agent symbolized by a signaling person and designated by reference numeral 848. Railroad car 840 carrying powered sugar from Afghanistan, which is highly suspicious, is routed by FDA agent 848 along through the least populated route, symbolized by a country side landscape and designated by reference numeral 850. A railroad car 842 carrying granulated sugar from Colombia, which is somewhat suspicious, is routed by FDA agent 848 along the faster route, symbolized by a rabbit and designated by reference numeral 852. A railroad car 844, carrying granulated sugar from Minnesota, is routed by signaling person 848 via the most economical domestic route symbolized by piggy bank and designated by reference numeral 854.

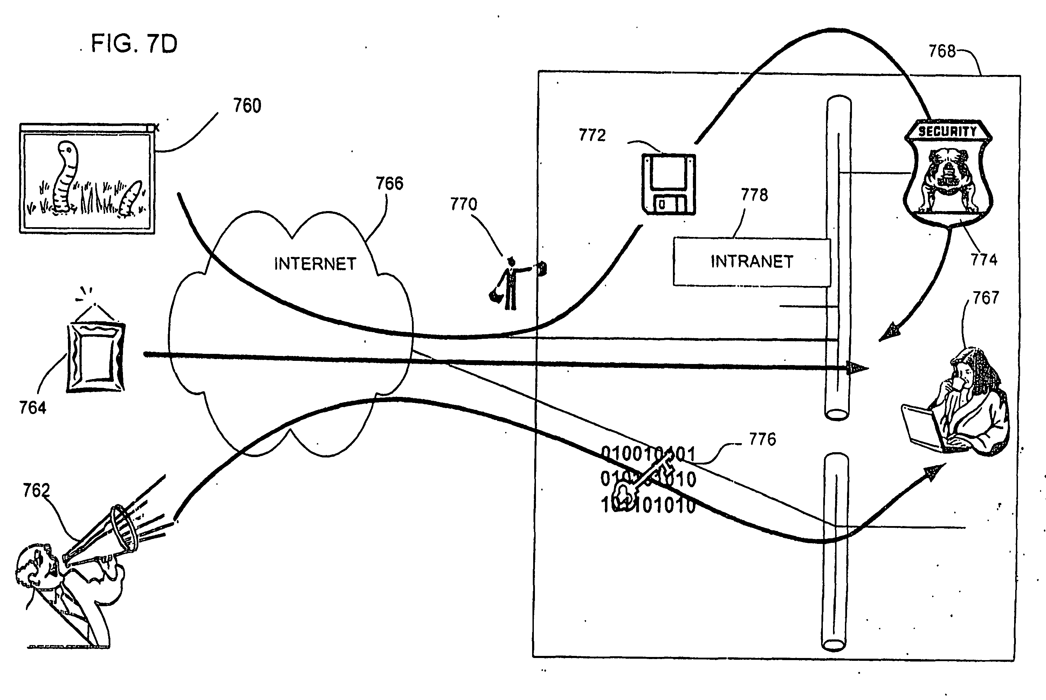

Fig. 7D shows the security routing functionality in an operative environment wherein the security classification of an object is a maliciousness classification. Each object is routed via a route appropriate to the maliciousness classification of the object.

As seen in Fig. 7D, three messages with different maliciousness classifications, designated individually by reference numerals 760, 762 and 764 are send via the Internet 766 to a user 767 within an organization 768 and are routed by a router symbolized by a signaling person and designated by reference numeral 770. Message 760 contains a VBS worm-virus, is symbolized by a worm symbol within a computer window and is considered to be highly malicious. Message 760 is routed by router 770 is routed through route 772, which is marked with a diskette image and employs a magnetic medium such a diskette as a transfer mechanism, to a computer security officer, which is symbolized by a security badge and designated by reference numeral 774. Message 762 contains offensive content, is symbolized by a shouting person and is considered to be somewhat malicious. Message 762 is routed by router 770 via an encrypted route over the organization's network. The encrypted route is marked with binary digits overlaid with a key and designated by reference numeral 776. A non-malicious message 764; which contains a drawing, symbolized by a picture frame, is routed by router 760 through the organization's network 778.

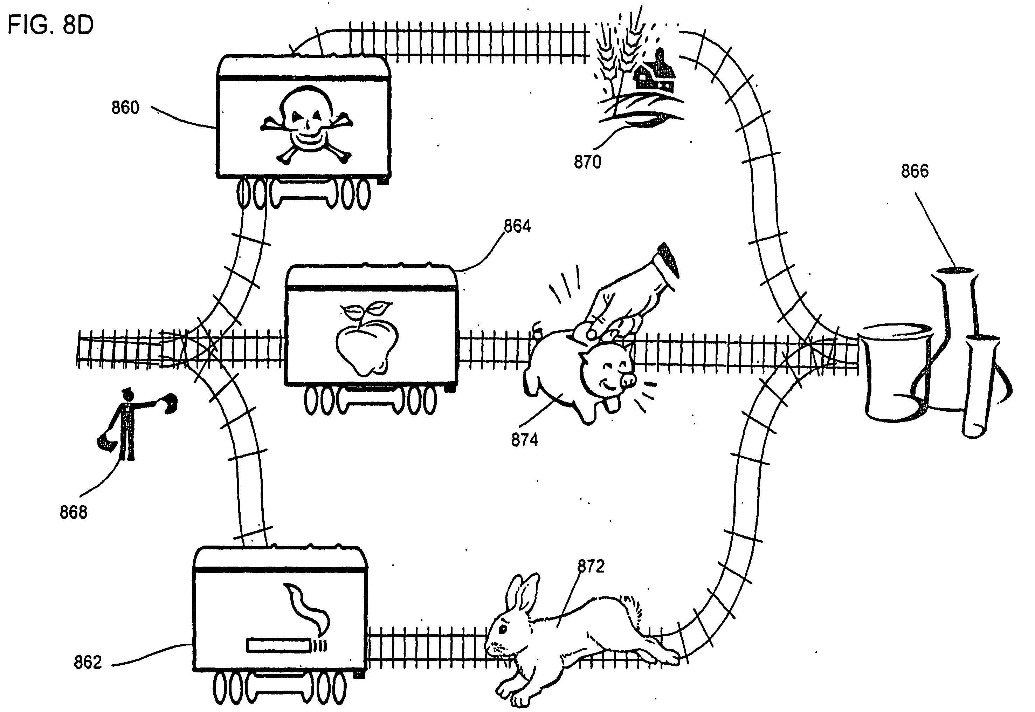

Fig. 8D illustrates the functionality of Fig. 7D in the symbolic context of railroad car routing. As seen in Fig. 8D, three railroad cars with different maliciousness classifications, designated individually by reference numerals 860, 862 and 864 are sent to an FDA inspection center symbolized by a figure of test tubes and designated by reference numeral 866. The railroad cars are routed by an FDA agent symbolized by a signaling person and designated by reference numeral 868. Railroad car 860 carrying illicit drugs and marked with a skull symbol, which is highly malicious, is routed by FDA agent 868 along through the least populated route, symbolized by a country side landscape and designated by reference numeral 870. A railroad car 862 carrying cigarettes and marked with a cigarette symbol, which is somewhat malicious, is routed by signaling person 868 along the faster route, symbolized by a rabbit and designated by reference numeral 872. A railroad car 864, carrying fruits and marked with an apple symbol, is routed by signaling person 868 via the most economical domestic route symbolized by piggy bank and designated by reference numeral 874.

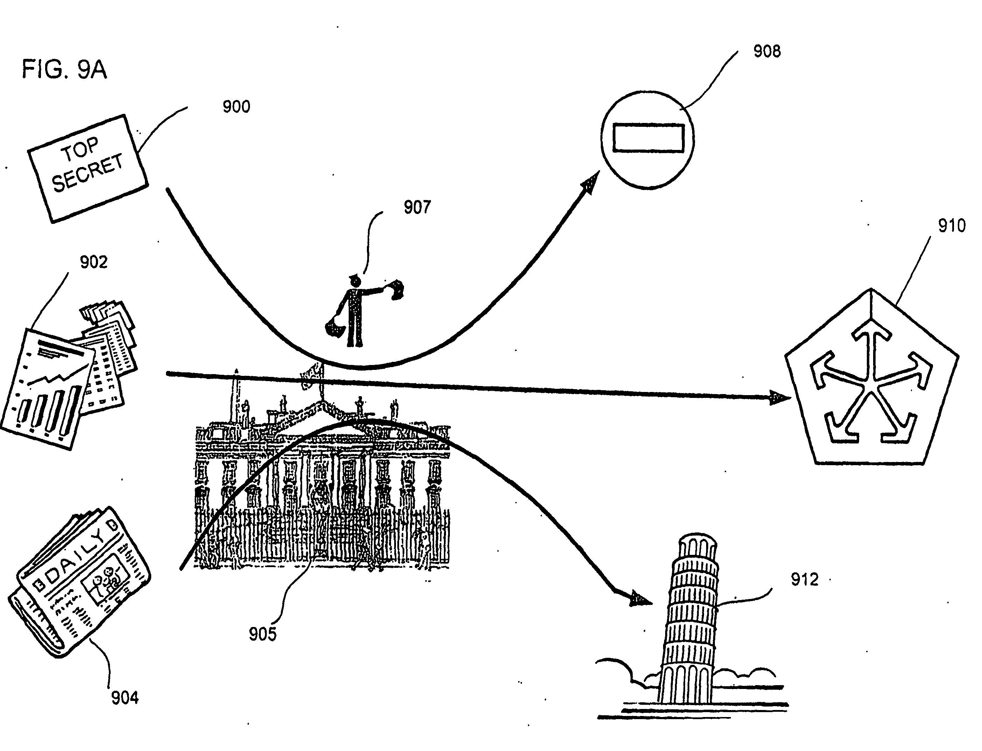

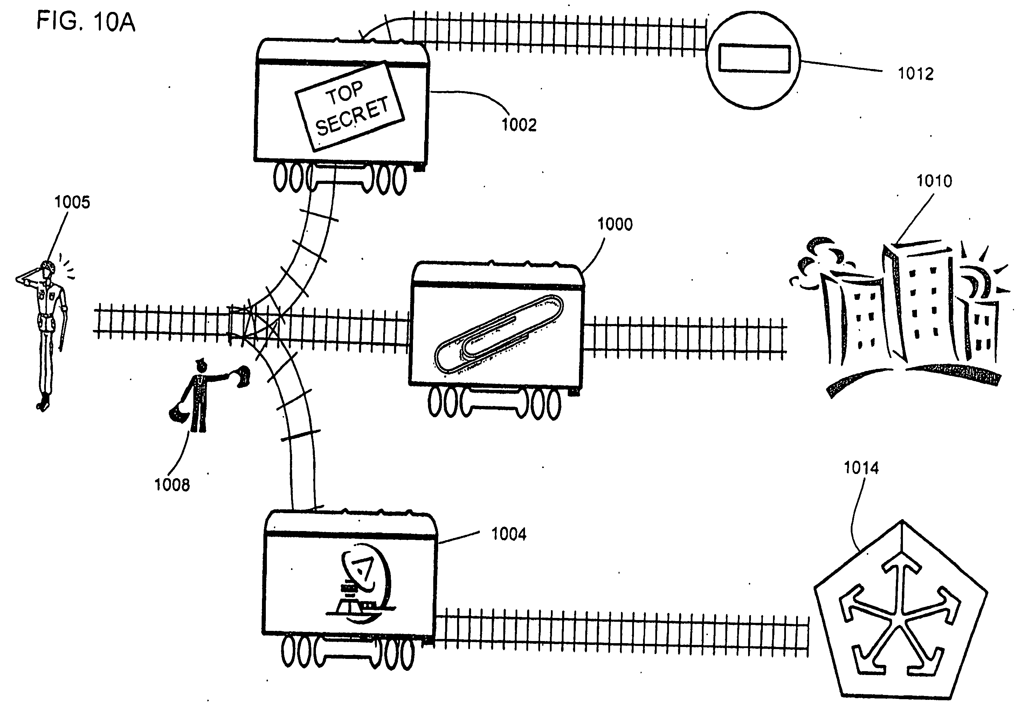

Reference is now made to Figs. 9A - 9D, which are simplified illustrations, partially symbolically depicting an example of security routing functionality wherein objects are routed or not routed in accordance with various security classifications thereof and to Figs. 10A - 10D, which are highly symbolic illustrations of the functionality of Figs. 9A - 9D respectively.

Fig. 9A shows the security routing functionality wherein the security classification of an object is a secrecy classification. Each object is routed to an address that has a secrecy classification appropriate thereto or not routed.

As seen in Fig. 9A, three messages with different secrecy classifications, designated individually by reference numerals 900, 902 and 904 are sent from the White House, which is designated by reference numeral 905 and are routed by a router, symbolized by a signaling person and designated by reference numeral 907. A top-secret message 900 sent from the White House is not routed by router 907 to any destination address outside of the White House, as symbolized by a no entry sign 908 blocking the message route. A message containing next year's budget, symbolized by a report containing a graph and designated by reference numeral 902, which is secret but not top secret, is routed by router 907 to any government destination address such as the Pentagon, which is designated by reference numeral 910. A non-secret message, such as press release 904 is sent to any destination address, such as a foreign address 912 symbolized by the leaning tower of Pisa.

Fig. 10A illustrates the functionality of Fig. 9A in the symbolic context of railroad car routing. As seen in Fig. 10A, three railroad cars with different secrecy classifications, designated individually by reference numerals 1000, 1002 and 1004 sent from a military base symbolized by a saluting soldier and designated by reference number 1005. The railroad cars are routed by a signaling person designated by reference numeral 1008. It is seen that a railroad car 1000 carrying office supplied and marked with a paper clip symbol, which clearly has a non-secret secrecy classification, is routed by signaling person 1008 to any destination address, such as a city 1010. A railroad car 1002 carrying documents and marked with a top secret inscription, clearly having a high level secrecy classification, is not routed by router 1008 to any destination address outside of the military base, as symbolized by a no entry sign 1012 blocking the tracks. A railroad car 1004 carrying radar equipment and marked with a radar symbol, presumably having a medium level secrecy classification, is routed by signaling person 1008 to any government destination address such as the Pentagon, which is designated by reference numeral 1014.

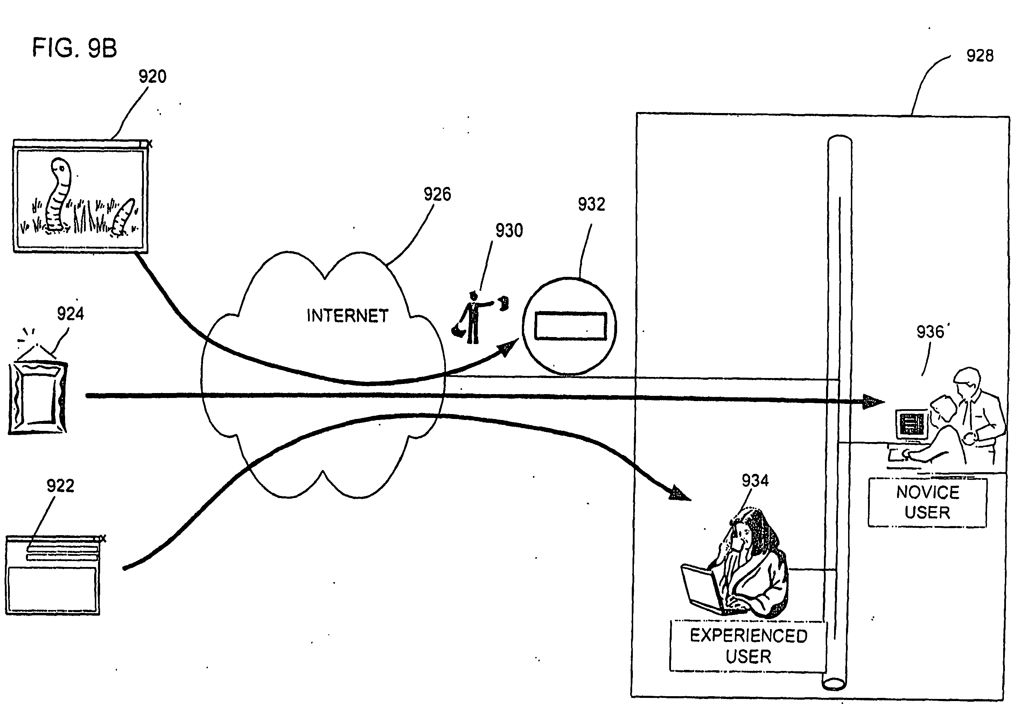

Fig. 9B shows the security routing functionality wherein the security classification of an object is a danger classification. Each object is routed to an address that has a danger classification appropriate thereto or not routed.

As seen in Fig. 9B, three messages with different danger classifications, designated individually by reference numerals 920, 922 and 924 are received via the Internet 926 at an organization 928 and are routed within the organization by a router symbolized by a signaling person and designated by reference numeral 930. Message 920, which contains a VBS worm-virus needed for research purposes, is symbolized by a worm symbol within a computer window and is considered to be highly dangerous. Message 920 is not routed by router 930 to any destination address in the organization as symbolized by a no entry sign 932 blocking the message route. Message 922, which contains a beta version of a computer program, symbolized by a computer form and considered to be somewhat dangerous, is routed by router 930 only to experienced users, such as user 934 symbolized by a notebook computer. A non-dangerous message 924, which contains a drawing, symbolized by a picture frame, is routed by router 930 to any address in the organization such as novice user 936 symbolized by a user accompanied by an instructor.

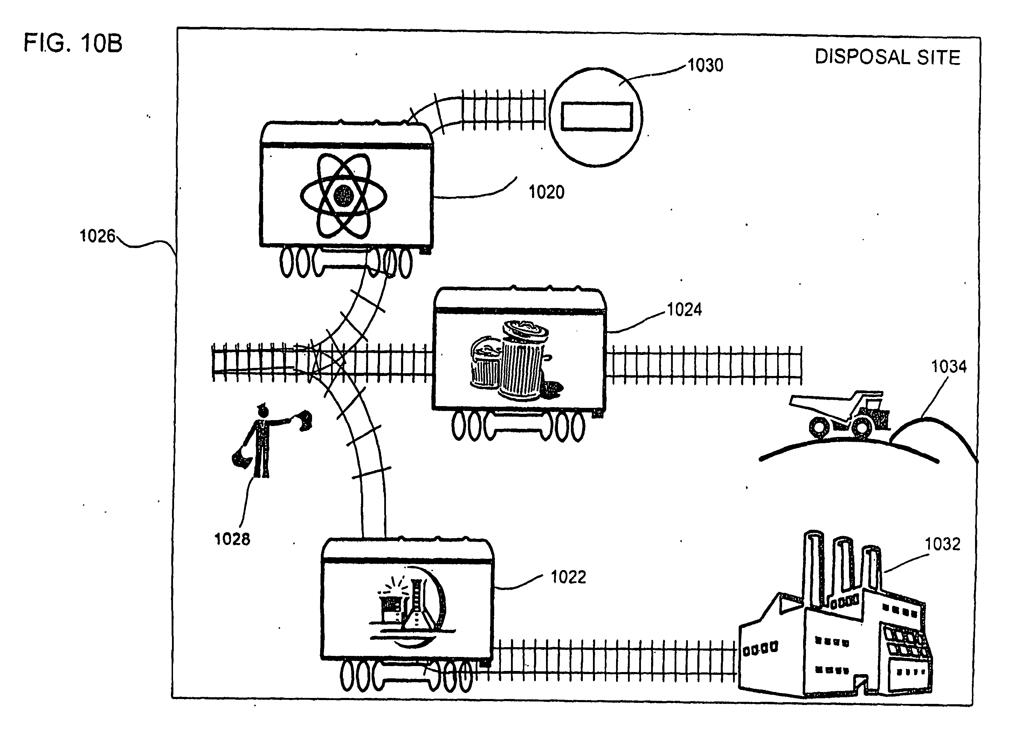

Fig. 10B illustrates the functionality of Fig. 9B in the symbolic context of railroad car routing. As seen in Fig. 10B, three railroad cars with different danger classifications, designated individually by reference numerals 1020, 1022 and 1024 are received at a disposal site designated by reference numeral 1026 and are routed within the disposal site by a signaling person designated by reference numeral 1028. Railroad car 1020 carrying depleted uranium and marked with an atom figure, which is highly dangerous, is not admitted by signaling person 1028 into the disposal site as symbolized by a no entry sign 1030 blocking the tracks. A railroad car 1022 carrying hospital waste and marked with a figure of test tubes, which is somewhat dangerous, is routed by signaling person 1028 to an the incinerator facility 1032 of the disposal site. A railroad car 1024, carrying waste plastic and glass and marked with a trash bin figure, is routed to by signaling person 1028 to the land fill facility 1034 of the disposal site.

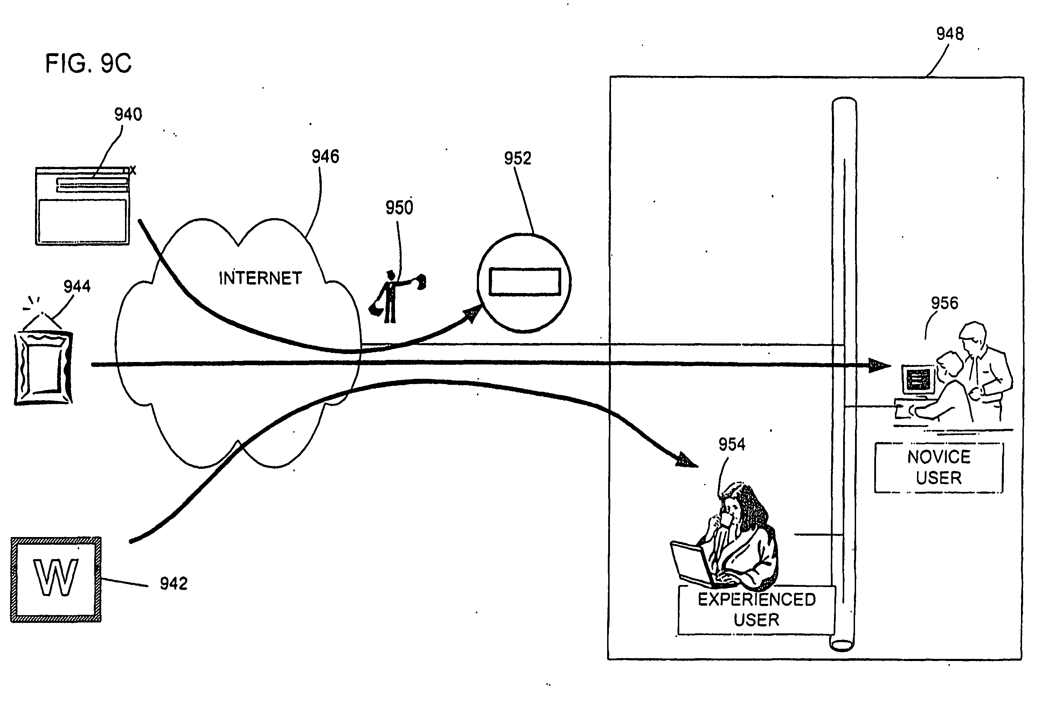

Fig. 9C shows the security routing functionality wherein the security classification of an object is a suspiciousness classification. Each object is routed to an address that has a suspiciousness classification appropriate thereto or not routed.

As seen in Fig. 9C, three messages with different suspiciousness classifications, designated individually by reference numerals 940, 942 and 944 are received via the Internet 946 at organization 948 and are routed within the organization by a router symbolized by a signaling person and designated by reference numeral 950. Message 940, which contains an executable program, is symbolized by a computer form and is considered to be highly dangerous. Message 940 is not routed by router 950 to any destination address in the organization as symbolized by a no entry sign 952 blocking the message route. Message 942, which contains a Microsoft Word document is symbolized by a Microsoft Word icon and is considered somewhat suspicious, is routed by router 950 only to experienced users, such as an user 954 symbolized by a notebook computer. A non- suspicious message 944, which contains a drawing, symbolized by a picture frame, is routed by router 950 to any address in the organization such as ordinary user 956 symbolized by auser accompanied by an instructor.

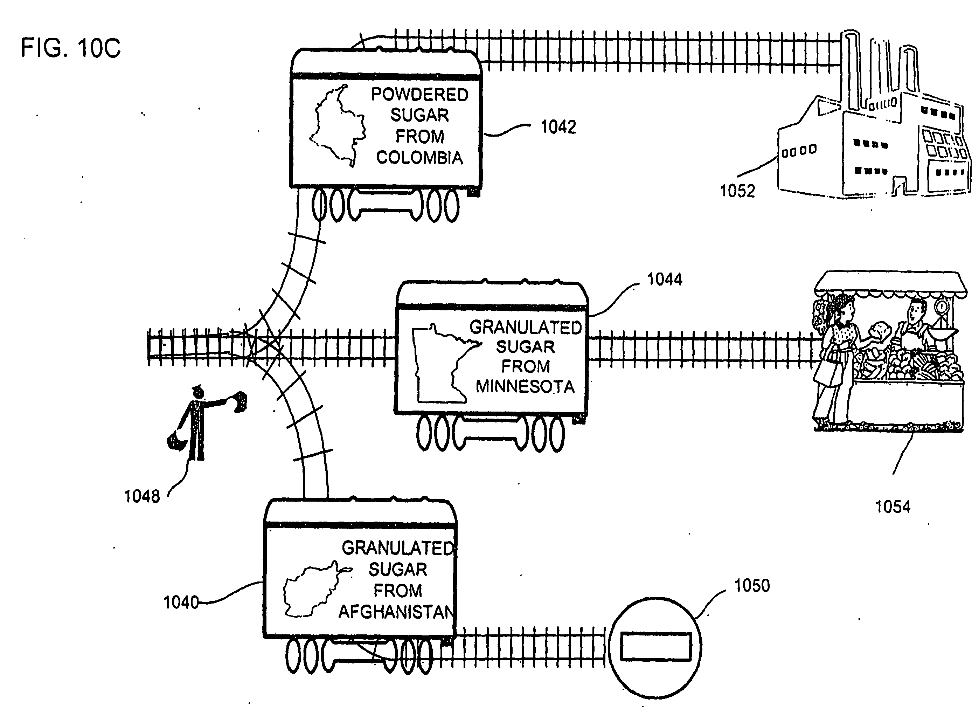

Fig. 10C illustrates the functionality of Fig. 9C in the symbolic context of railroad car routing. As seen in Fig. 10C, three railroad cars with different suspiciousness classifications, designated individually by reference numerals 1040, 1042 and 1044 are routed by an FDA agent symbolized by a signaling person and designated by reference numeral 1048. Railroad car 1040 carrying powered sugar from Afghanistan, which is highly suspicious, is not sent to any destination, as symbolized by a no entry sign 1050 blocking the tracks. A railroad car 1042 carrying granulated sugar from Colombia, which is somewhat suspicious, is routed by FDA agent 1048 to a nation-wide soft-drinks manufacturer designated by reference numeral 1052, which has strict quality control facilities. A railroad car 1044, carrying granulated sugar from Minnesota, is routed by signaling person 1048 to any destination address such as an open market 1054.

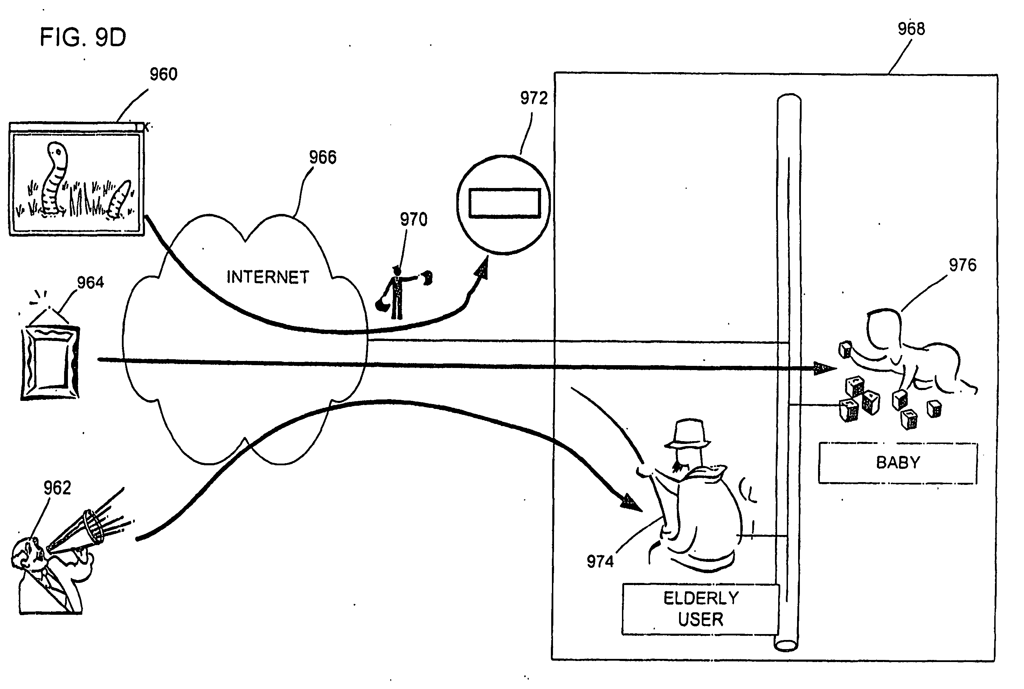

Fig. 9D shows the security routing functionality wherein the security classification of an object is a maliciousness classification. Each object is routed to an address that is equipped to handle objects having a corresponding maliciousness classification or is not routed.

As seen in Fig. 9D, three messages with different maliciousness classifications, designated individually by reference numerals 960, 962 and 964 are received via the Internet 966 by an organization 968 and are routed within the organization by a router symbolized by a signaling person and designated by reference numeral 970. Message 960 contains a VBS worm-virus, is symbolized by a worm symbol within a computer window and is considered to be highly malicious. Message 960 is not routed by router 970 to any destination address in the organization as symbolized by a no entry sign 972 blocking the message route. Message 962 contains offensive content, is symbolized by a shouting person and is considered to be somewhat malicious. Message 962, which is routed by router 970 only to adult users, such as an elderly user 974. A non-malicious message 964, which contains a drawing, symbolized by a picture frame, is routed by router 970 to any destination address such as user 976 symbolized by a baby.

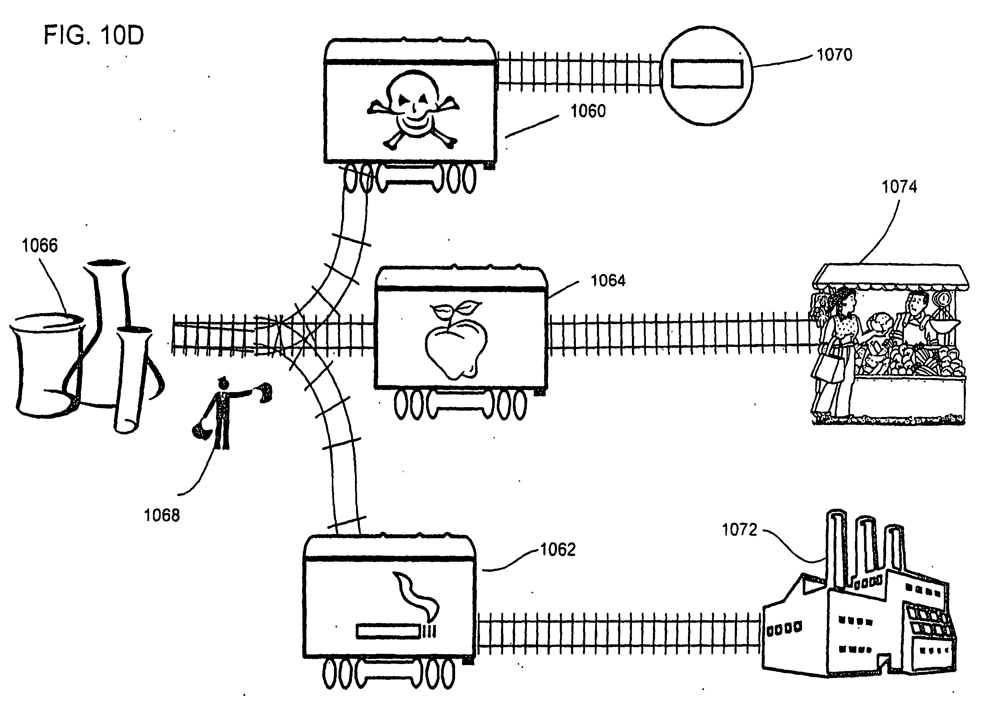

Fig. 10D illustrates the functionality of Fig. 9D in the symbolic context of railroad car routing. As seen in Fig. 10D, three railroad cars with different maliciousness classifications, designated individually by reference numerals 1060, 1062 and 1064 are sent from an FDA inspection center symbolized by a figure of test tubes and designated by reference numeral 1066. The railroad cars are routed by an FDA agent symbolized by a signaling person and designated by reference numeral 1068. Railroad car 1060 carrying illicit drugs and marked with a skull symbol, which is highly malicious, is not routed by FDA agent 1068 to any destination address outside of the inspection center as symbolized by a no entry sign 1070 blocking the tracks. A railroad car 1062 carrying cigarettes and marked with a cigarette symbol, which is somewhat malicious, is sent by FDA agent 1068 only to an authorized bonded packaging facility 1072. A railroad car 1064, carrying fruits and marked with an apple symbol, is routed by FDA agent 1068 to any destination address such as an open market 1074.

### Detailed Description of the Preferred Embodiment

Those skilled in the art will appreciate that the interaction between a Web browser and the Internet server is usually carried out as follows: The browser (e.g. Internet Explorer, Netscape, etc.) sends to the Web server a request for returning a file (e.g. HTML, XML, PDF, GIF and so forth). The Web server can send in return a file of the requested type (e.g. HTML), but also a file of a different type (e.g. JPG, GIF, WAV). Moreover, the Web server can send in return a plurality of files, not necessary of the same type. If there is a prior knowledge about absence of executable code within the type of the requested file, and the returned file is of the same type as requested, then the file can be considered as "trusted", and consequently routed to its destination (i.e. the browser) instead of to the virus detection system.

It will be appreciated by persons skilled in the art that the present invention is not limited by what has been particularly shown and described herein above.

## Claims

1. A method for speeding up the transfer of data objects (540, 542, 544) through a network gateway (550) that includes a virus detection system (552), the method comprising the steps of:
(a) classifying an incoming data object (540, 542, 544) to the gateway (550) according to a pre-determined criterion related to a type of said incoming data object (540, 542, 544);
(b) if said classifying indicates that said incoming data object (544) is distrusted: routing said incoming data object (544) to the virus detection system (552); and
(c) otherwise, routing said incoming data object (540) directly to a destination (547) thereof;
the method **characterized in that** said criterion is prior information that a data object (544) of said type includes executable code.

2. The method of claim 1, wherein said incoming data object (540, 542, 544) is selected from the group consisting of a file, a Web page, an e-mail message and a communication packet.

3. The method of claim 1, wherein the network gateway (550) connects between a wide area network (546) and a local area network (548).

4. The method of claim 1, wherein the network gateway (550) connects between a wide area network (546) and a computer system (547).

5. The method of claim 1, wherein the network gateway connects between a local area network (548) and a computer system (547).

6. A router apparatus comprising:
(a) programmable means (552) for detecting viruses within data objects (540, 542, 544) that pass through the apparatus;
(b) programmable means (550) for classifying a data object (540, 542, 544) according to a pre-determined criterion related to a type of said data object; and
(c) programmable means (550), separate from said programmable means (552) for detecting viruses, for routing said data object (540, 542, 544):
(i) to said programmable means (552) for detecting viruses if said classifying indicates that said data object (544) is distrusted, and
(ii) otherwise, directly to a destination (547) thereof;
the apparatus **characterized in that** said criterion is prior information that a data object (544) of said type includes executable code.

7. The router apparatus of claim 6, wherein said programmable means (550, 552) comprise software elements.

8. The router apparatus of claim 6, wherein said programmable means (550, 552) comprise hardware elements.

9. A method for speeding up the transfer of data objects (540, 542, 544) through a network gateway (550) that includes a virus detection system (552), the method comprising the steps of:
(a) classifying an incoming data object (540, 542, 544) selected from the group consisting of Web pages, e-mail messages and communication packets to the gateway (550) according to a pre-determined criterion related to a type of said incoming data object (540, 542, 544);
(b) if said classifying indicates that said incoming data object (544) is distrusted: routing said incoming data object (540) to the virus detection system (552); and
(c) otherwise, routing said incoming data objects (544) directly to a destination (547) thereof;
the method **characterized in that** said criterion is prior information that a data object (544) of said type includes executable code.

10. A router apparatus comprising:
(a) programmable means (552) for detecting viruses within data objects (540, 542, 544) selected from the group consisting of Web pages, e-mail messages and communication packets that pass through the apparatus;
(b) programmable means (550) for classifying a data object (540, 542, 544) according to a pre-determined criterion related to a type of said data object; and
(c) programmables means (550), separate from said programmable means (552) for detecting viruses, for routing said data object (540, 542, 544):
(i) to said programmable means (552) for detecting viruses if said classifying indicates that said data object (544) is distrusted, and
(ii) otherwise, directly to a destination (547) thereof;
the apparatus **characterized in that** said criterion is prior information that a data object (544) of said type includes executable code.

## Patentansprüche

1. Verfahren zum Beschleunigen des Transfers von Datenobjekten (540, 542, 544) durch ein Netz-Gateway (550) hindurch, das ein Virus-Detektierungssystem (552) enthält, wobei das Verfahren die folgenden Schritte aufweist:
(a) Klassifizierung eines zu dem Gateway (550) eingehenden Datenobjektes (540, 542, 544) gemäß einem vorgegebenen, den Typ des genannten eingehenden Datenobjektes (540, 542, 544) betreffenden Kriteriums;
(b) wenn die genannte Klassifizierung angibt, dass das eingehende Datenobjekt (544) unglaubwürdig ist: ein Routing des genannten eingehenden Datenobjektes (544) zu dem Virus-Detektierungssystem (552); und
(c) ansonsten, ein Routing des genannten eingehenden Datenobjektes (540) direkt zu seinem Ziel (547);
wobei das Verfahren **dadurch gekennzeichnet ist, dass** das genannte Kriterium eine Prioritätsinformation ist, dass ein Datenobjekt (544) des genannten Typs einen durchführbaren Kode enthält.

2. Verfahren nach Anspruch 1, wobei das genannte eingehende Datenobjekt (544) aus einer aus Web-Seiten, e-Mail-Nachrichten und Kommunikationspaketen bestehenden Gruppe gewählt wird.

3. Verfahren nach Anspruch 1, wobei das Netz-Gateway (550) zwischen einem Ferntransportnetz (546) und einem Lokaltransportnetz (548) verbindet.

4. Verfahren nach Anspruch 1, wobei das Netz-Gateway (550) zwischen einem Ferntransportnetz (546) und einem Rechensystem (547) verbindet.

5. Verfahren nach Anspruch 1, wobei das Netz-Gateway zwischen einem Lokaltransportnetz (548) und einem Rechensystem (547) verbindet.

6. Routing-Vorrichtung aufweisend:
(a) programmierbare Mittel (552) zum Detektieren von Viren in Datenobjekten (540, 542, 544), die durch die Vorrichtung hindurch gehen;
(b) programmierbare Mittel (550) zum Klassifizieren eines Datenobjektes (540, 542, 544) gemäß einem vorgegebenen, den Typ des genannten Datenobjektes (540, 542, 544) betreffenden Kriteriums; und
(c) programmierbare Mittel (550), getrennte von den genannten programmierbaren Mitteln (552) zum Detektieren von Viren, zum Routing des genannten Datenobjektes (540, 542, 544):
(i) zu den genannten programmierbaren Mitteln (552) zum Detektieren von Viren, wenn die genannte Klassifizierung angibt, dass das genannte Datenobjekt (544) unglaubwürdig ist, und
(ii) ansonsten, direkt zu seinem Ziel (547);
wobei die Vorrichtung **dadurch gekennzeichnet ist, dass** das genannte Kriterium eine Prioritätsinformation ist, dass ein Datenobjekt (544) des genannten Typs einen durchführbaren Kode enthält.

7. Routing-Vorrichtung nach Anspruch 6, wobei die programmierbaren Mittel (550, 552) Software-Elemente aufweisen.

8. Routing-Vorrichtung nach Anspruch 6, wobei die programmierbaren Mittel (550, 552) Hardware-Elemente aufweisen.

9. Verfahren zum Beschleunigen des Transfers von Datenobjekten (540, 542, 544) durch ein Netz-Gateway (550) hindurch, das ein Virus-Detektierungssystem (552) enthält, wobei das Verfahren die folgenden Schritte aufweist:
(a) Klassifizierung eines zu dem Gateway (550) eingehenden Datenobjektes (540, 542, 544), das aus einer aus Web-Seiten, e-Mail-Nachrichten und Kommunikationspaketen bestehenden Gruppe gewählt wird, gemäß einem vorgegebenen, den Typ des genannten eingehenden Datenobjektes (540, 542, 544) betreffenden Kriteriums;
(b) wenn die genannte Klassifizierung angibt, dass das eingehende Datenobjekt (544) unglaubwürdig ist: ein Routing des genannten eingehenden Datenobjektes (544) zu dem Virus-Detektierungssystem (552); und
(c) ansonsten, ein Routing des genannten eingehenden Datenobjektes (540) direkt zu seinem Ziel (547);
wobei das Verfahren **dadurch gekennzeichnet ist, dass** das genannte Kriterium eine Prioritätsinformation ist, dass ein Datenobjekt (544) des genannten Typs einen durchführbaren Kode enthält.

10. Routing-Vorrichtung aufweisend:
(a) programmierbare Mittel (552) zum Detektieren von Viren in Datenobjekten (540, 542, 544), die aus einer aus Web-Seiten, e-Mail-Nachrichten und Kommunikationspaketen bestehenden Gruppe gewählt werden, die durch die Vorrichtung hindurch gehen;
(b) programmierbare Mittel (550) zum Klassifizieren eines Datenobjektes (540, 542, 544) gemäß einem vorgegebenen, den Typ des genannten Datenobjektes (540, 542, 544) betreffenden Kriteriums; und
(c) programmierbare Mittel (550), getrennt von den genannten programmierbaren Mitteln (552) zum Detektieren von Viren, zum Routing des genannten Datenobjektes (540, 542, 544):
(i) zu den genannten programmierbaren Mitteln (552) zum Detektieren von Viren, wenn die genannte Klassifizierung angibt, dass das genannte Datenobjekt (544) unglaubwürdig ist, und
(ii) ansonsten, direkt zu seinem Ziel (547);
wobei die Vorrichtung **dadurch gekennzeichnet ist, dass** das genannte Kriterium eine Prioritätsinformation ist, dass ein Datenobjekt (544) des genannten Typs einen durchführbaren Kode enthält.

## Revendications

1. Une méthode d'accélération de la transmission des données à objets (540, 542, 544) par une centrale des réseaux (550) renfermant un système de détection de virus (552), cette méthode comprenant des étapes
a) de classification d'une donnée à objets entrant (540, 542, 544) dans la centrale des réseaux (550) conformément au critère prédéterminé relatif au type de la donnée à objets entrant mentionnée (540, 542, 544);
b) en cas que cette classification indique que la donnée à objets entrant (544) doit être méfiée, cette donnée à objets entrant mentionnée (544) est routée vers le système de détection de virus (552); et
c) sinon, la donnée à objets entrant mentionnée (540) est routée directement vers sa destination (547);
cette méthode étant **caractérisée en ce que** le critère mentionné représente une information prioritaire que la donnée à objets (544) du type mentionné contient un code réalisable.

2. La méthode selon la revendication 1, dans laquelle la donnée à objets entrant mentionnée (540, 542, 544) est choisie du groupe consistant d'un ensemble, d'une page web, d'un message e-mail et d'un paquet de communication.

3. La méthode selon la revendication 1, dans laquelle la centrale des réseaux (550) assure la connexion entre un réseau de longue distance (546) et un réseau d'une étendue locale (548).

4. La méthode selon la revendication 1, dans laquelle la centrale des réseaux (550) assure la connexion entre un réseau de longue distance (546) et un système d'ordinateur (547).

5. La méthode selon la revendication 1, dans laquelle la centrale des réseaux assure la connexion entre un réseau d'une étendue locale (546) et un système d'ordinateur (547).

6. Un appareil de routage comprenant
a) des moyens programmables (552) de détection de virus parmi des données à objets (541, 542, 544) passant par l'appareil;
b) des moyens programmables (550) pour la classification de la donnée à objets (540, 542, 544) conformément au critère prédéterminé relatif au type de la donnée à objets mentionnée et
c) des moyens programmables (550), autres que des moyens programmables de détection de virus (552), pour le routage de la donnée à objets (540, 542, 544):
i) vers des moyens programmables de détection de virus (552) en cas que la classification mentionnée indique que la donnée à objets mentionnée (544) est méfiée et
ii) sinon, cette donnée à objets est routée directement vers sa destination (547);
l'appareil de routage est **caractérisé en ce que** le critère mentionné est l'information prioritaire que la donnée à objets (544) du type mentionnée contient un code réalisable.

7. L'appareil de routage selon la revendication 6, dans lequel les moyens programmables mentionnés (550, 552) contiennent des éléments software.

8. L'appareil de routage selon la revendication 6, dans lequel les moyens programmables mentionnés (550, 552) contiennent des éléments hardware.

9. Une méthode d'accélération de la transmission des données à objets (550, 542, 544) par une centrale des réseaux (550) renfermant un système de détection de virus (552), cette méthode comprenant des étapes
a) de classification d'une donnée à objets entrant (540, 542, 544) choisie d'un groupe consistant des pages web, des messages e-mail et des paquets de communication dans la centrale (550) selon un critère prédéterminé relatif au type de la donnée à objets entrant mentionnée (540, 542, 544);
b) en cas que cette classification indique que la donnée à objets entrant mentionnée (544) est méfiée, cette donnée à objets entrant mentionnée (540) est routée vers le système de détection de virus (552); et
c) sinon, la donnée à objets entrant mentionnée (544) est routée directement vers sa destination (547);
cette méthode étant **caractérisée en ce que** le critère mentionné est l'information prioritaire que la donnée à objets (544) du type mentionné contient un code réalisable.

10. Un appareil de routage comprenant
a) des moyens de programmation (552) pour la détection de virus parmi les donnée à objets (540, 542, 544) choisies du groupe consistant des pages web, des messages e-mail et des paquets de communications passant par l'appareil;
b) des moyens de programmation (550) pour la classification de la donnée à objets (540, 542, 544) selon le critère prédéterminé relatif au type de la donnée à objets mentionnéë et
c) des moyens de programmation (550), autres que les moyens de programmation mentionnés pour la détection de virus (552) pour router la donnée à objets mentionnée (540, 542, 544):
i) vers les moyens programmables mentionnés pour la détection de virus (552) en cas que la donnée à objets (544) mentionnée est méfiée et
ii) sinon, cette donnée à objets est routée directement vers sa destination (547),
cet appareil étant **caractérisé en ce que** le critère mentionné est l'information prioritaire que la donnée à objets (544) du type mentionné contient un code réalisable.
